# EUROPEAN PATENT APPLICATION

(11) **EP 4 832 210 A1**
(43) Date of publication of application: **28.10.2026**
(21) Application number: 23962000.8
(22) Date of filing: 22.12.2023
(51) Int. Cl.: H01M 50/30, H01M 50/147, H01M 50/317

(54) **BATTERY CELL, BATTERY AND ELECTRIC DEVICE**

(71) Applicant: Contemporary Amperex Technology Co., Limited, Ningde, Fujian 352100 (CN)
(72) Inventor: XING, Chengyou, Ningde, Fujian 352100 (CN); MENG, Wanqiu, Ningde, Fujian 352100 (CN); XU, Xiaofu, Ningde, Fujian 352100 (CN); JIN, Haizu, Ningde, Fujian 352100 (CN); LI, Quankun, Ningde, Fujian 352100 (CN); WANG, Peng, Ningde, Fujian 352100 (CN)
(74) Representative: Gong, Jinping
(86) International application number: PCT/CN2023/141211
(87) International publication number: WO 2025/129678

(57) **Abstract**

The present application discloses a battery cell, a battery and an electric device. The battery cell includes a casing, a breathable membrane assembly, and a one-way valve. The casing has a wall portion, where the wall portion is provided with a first vent hole and a second vent hole arranged at intervals, and the first vent hole and the second vent hole each communicate the inside of the casing with the outside of the casing. The breathable membrane assembly is disposed on the wall portion and covers the second vent hole. The one-way valve is disposed on the wall portion and covers the first vent hole. Through such arrangements, gas inside the casing can be vented to the outside of the casing in a timely manner, so that gas pressure inside the casing is prevented from becoming excessively high, thereby reducing a risk of premature opening of a pressure relief mechanism and significantly improving the service life of the battery cell.

## Description

### TECHNICAL FIELD

The present application relates to the field of new energy technologies, and in particular, to a battery cell, a battery, and an electric device.

### BACKGROUND

With the continuous intensification of global energy and environmental issues, new energy, as one of the fields of sustainable development, is developing rapidly. Batteries, as a new energy source, are being applied increasingly widely, and higher requirements are imposed on operational reliability and service life thereof. During charging and discharging of a battery cell, gas generated inside the battery cell causes internal pressure of the battery cell to increase. To ensure safety of the battery cell, a pressure relief mechanism for releasing the internal pressure of the battery cell is generally provided on the housing of the battery cell, so that when the internal pressure or temperature of the battery cell reaches a threshold, the pressure relief mechanism can be actuated to relieve pressure inside the battery cell. However, during use of existing pressure relief mechanisms of battery cells, premature actuation to relieve pressure may occur, resulting in poor operational stability of the battery cell, which is not conducive to improving the service life and operational reliability of the battery cell. The above statements are merely intended to provide background technical information related to the present application and do not necessarily constitute prior art.

### UTILITY MODEL CONTENT

A technical problem to be resolved in the present application is to provide a battery cell, a battery, and an electric device, so as to vent gas inside the battery cell housing to the outside of the housing in a timely manner, so that gas pressure inside the battery cell housing is prevented from becoming excessively high, thereby reducing a risk of premature opening of a pressure relief mechanism and significantly improving a service life of the battery cell.

To resolve the above technical problem, a technical solution used in the present application is to provide a battery cell. The battery cell includes a housing, a breathable membrane assembly, and a one-way valve. The housing has a wall portion, where the wall portion is provided with a first vent hole and a second vent hole arranged at intervals, and the first vent hole and the second vent hole each communicate the inside of the housing with the outside of the housing. The breathable membrane assembly is disposed on the wall portion, and the breathable membrane assembly covers the second vent hole. The one-way valve is disposed on the wall portion, and the one-way valve covers the first vent hole. The breathable membrane assembly includes a breathable membrane. The one-way valve includes a valve body and a valve core, where a valve cavity is formed inside the valve body, the valve body is provided with a gas inlet and a gas outlet, the gas inlet is configured to communicate the valve cavity with the inside of the housing, and the gas outlet is configured to communicate the valve cavity with the outside of the housing; the valve core is disposed in the valve cavity, the valve core is configured to block the gas inlet, and the valve core is configured to open the gas inlet under an action of gas inside the housing and release the gas inside the battery cell. Through such arrangement, the breathable membrane assembly and the one-way valve are arranged in parallel, and both can vent gas simultaneously to achieve a relatively large gas venting rate.

In an implementation, the wall portion has an outer surface and an inner surface arranged opposite to each other. The outer surface faces the outside of the housing, and the inner surface faces the inside of the housing. The valve body is disposed on the outer surface, and at least part of the valve body protrudes from the outer surface. At least part of the breathable membrane assembly is disposed on the outer surface. In this way, installation of the breathable membrane assembly and the one-way valve can be facilitated.

In an implementation, the wall portion has an outer surface and an inner surface arranged opposite to each other, where the outer surface faces the outside of the housing, and the inner surface faces the inside of the housing. The valve body is disposed on the outer surface, and at least part of the valve body protrudes from the outer surface. The breathable membrane assembly is disposed on the inner surface. In this way, installation of the breathable membrane assembly and the one-way valve can be facilitated.

In an implementation, the wall portion has an outer surface and an inner surface arranged opposite to each other, where the outer surface faces the outside of the housing, and the inner surface faces the inside of the housing. The valve body is disposed on the outer surface, and at least part of the valve body protrudes from the inner surface. The breathable membrane assembly is disposed on the inner surface. In this way, influence of mounting of the one-way valve on the height of the battery cell can be reduced.

In an implementation, the wall portion has an outer surface and an inner surface arranged opposite to each other, where the outer surface faces the outside of the housing, and the inner surface faces the inside of the housing. The valve body is disposed on the outer surface, and at least part of the valve body protrudes from the inner surface. At least part of the breathable membrane assembly is disposed on the outer surface. In this way, influence of mounting of the one-way valve on the height of the battery cell can be reduced.

In an implementation, the valve body includes a valve seat and a valve cover. The valve cover includes a cover top wall and a cover side wall connected to the cover top wall, where the cover top wall, the cover side wall, and the valve seat enclose the valve cavity, the valve seat is provided with a gas inlet, and the valve cover is provided with a gas outlet. In this way, gas venting can be facilitated.

In an implementation, the valve seat has a first through hole extending through the valve seat, and the gas inlet is the first through hole. In this way, gas venting can be facilitated.

In an implementation, the cover side wall has a second through hole extending through the cover side wall, and the gas outlet is the second through hole. In this way, gas venting can be facilitated.

In an implementation, along the direction away from the cover top wall, the second through hole extends to the end of the cover side wall. In this way, gas venting can be facilitated.

In an implementation, a plurality of the second through holes are provided, and the plurality of second through holes are circumferentially spaced apart on the side wall. In this way, gas venting can be facilitated.

In an implementation, a first guide post protrudes from a side of the cover top wall facing the valve seat, the cover top wall has a third through hole extending through the cover top wall and the first guide post, or the cover top wall has a third through hole extending through the cover top wall, and the gas outlet is the third through hole. In this way, gas venting can be facilitated.

In an implementation, the valve cover further includes a flanged wall, the cover side wall connects the cover top wall and the flanged wall, the flanged wall extends relative to the cover side wall toward a side away from the valve cavity, and the flanged wall is connected to the valve seat. In this way, installation of the one-way valve is facilitated.

In an implementation, a first recess recessed relative to the surface of the valve seat is provided on a side of the valve seat facing the valve cover, and at least part of the flanged wall is accommodated in the first recess and connected to the valve seat. In this way, connection strength can be improved while the mounting height of the one-way valve can be reduced.

In an implementation, a surface of the flanged wall facing the cover top wall is flush with a surface of the valve seat facing the valve cover; or the surface of the flanged wall facing the cover top wall is lower than the surface of the valve seat facing the valve cover. In this way, the mounting height of the one-way valve can be reduced.

In an implementation, the flanged wall is welded to the valve seat; where, in a circumferential direction of the cover side wall, at least part of a first welding mark of the flanged wall and the valve seat is offset from the second through hole on the cover side wall. In this way, damage to valve core components caused by high temperature generated during welding can be reduced.

In an implementation, a connecting protrusion protrudes from the outer peripheral surface of the valve seat, an accommodating groove is provided on the inner peripheral surface of the flanged wall, and the connecting protrusion is accommodated in the accommodating groove and connected to the flanged wall. In this way, connection strength can be improved while the mounting height of the one-way valve can be reduced.

In an implementation, the connecting protrusion is welded to the flanged wall, where the flanged wall has an upper surface and a lower surface arranged opposite to each other, the upper surface faces the cover top wall, and a second welding mark formed by welding between the connecting protrusion and the flanged wall is located on the lower surface of the flanged wall. In this way, damage to valve core components caused by high temperature generated during welding can be reduced.

In an implementation, the valve body includes a valve cover. The valve cover includes a cover top wall and a cover side wall connected to the cover top wall. The cover top wall, the cover side wall, and the wall portion enclose the valve cavity, a through hole section of the first vent hole is the gas inlet, and the cover side wall is provided with the gas outlet. In this way, gas venting can be facilitated.

In an implementation, a second recess recessed relative to an outer surface of the wall portion is provided on a side of the wall portion facing the outside of the housing, the valve cover further includes a flanged wall, the cover side wall connects the cover top wall and the flanged wall, the flanged wall extends relative to the cover side wall toward a side away from the valve cavity, and at least part of the flanged wall is accommodated in the second recess and connected to the wall portion. In this way, the mounting height of the one-way valve can be reduced.

In an implementation, the valve body includes a valve seat and a valve cover. The valve seat includes a seat bottom wall and a seat side wall connected to the seat bottom wall. The valve cover is disposed at an end of the valve seat away from the seat bottom wall, the valve cover, the seat side wall, and the seat bottom wall enclose the valve cavity, the valve seat is provided with a fourth through hole, and the gas inlet is the fourth through hole. In this way, gas venting can be facilitated.

In an implementation, the valve cover has a fifth through hole extending through the valve cover, and the gas outlet includes the fifth through hole. In this way, gas venting can be facilitated.

In an implementation, the valve cover is connected to the valve seat, and the gas outlet includes a first vent gap formed between the valve cover and the valve seat. In this way, gas venting can be facilitated.

In an implementation, the valve cover is connected to the wall portion, and the gas outlet includes a second vent gap formed between the valve cover and the wall portion. In this way, gas venting can be facilitated.

In an implementation, the valve body includes a valve seat. The valve seat includes a seat bottom wall and a seat side wall connected to the seat bottom wall. The seat bottom wall, the seat side wall, and the wall portion enclose the valve cavity, the valve seat is provided with a fourth through hole, the gas inlet is the fourth through hole, and the gas outlet is the first vent hole. In this way, the mounting height of the one-way valve can be reduced.

In an implementation, the valve core includes an elastic member and a blocking member. The elastic member is disposed in the valve cavity. The blocking member is movably disposed in the valve cavity, where the blocking member is configured to block the gas inlet under the action of the elastic member and to open the gas inlet under an action of gas inside the housing. In this way, gas venting can be facilitated.

In an implementation, the valve body includes a valve cover, a first guide post protrudes from a side of the valve cover facing the valve cavity, and a part of the elastic member is sleeved on an outer side of the first guide post. In this way, positioning and guidance of the elastic member can be achieved.

In an implementation, a diameter of the first guide post is D1, and an inner diameter of the elastic member is D2, satisfying 0 mm < D2 - D1 ≤ 5 mm. In this way, installation of the elastic member and the first guide post can be facilitated.

In an implementation, a second guide post protrudes from a side of the blocking member facing the valve cover, and a part of the elastic member is sleeved on the outer side of the second guide post. In this way, positioning and guidance of the elastic member can be achieved.

In an implementation, a diameter of the second guide post is D3, and an inner diameter of the elastic member is D2, satisfying 0 mm < D3 - D1 ≤ 5 mm. In this way, installation of the elastic member and the second guide post can be facilitated.

In an implementation, in an axial direction of the elastic member, a gap is present between an end surface of the first guide post away from the valve cover and an end surface of the second guide post close to the valve cover; and optionally, a height H1 of the gap satisfies 0 mm < H1 ≤ 0.5 mm. In this way, space utilization can be improved.

In an implementation, in an axial direction of the valve cavity, two ends of the elastic member respectively abut against the valve cover and the blocking member, a distance between a first abutting surface of the valve cover and a second abutting surface of the blocking member is L1, and a solid length of the elastic member is L2, satisfying L1 > L2, where the solid length of the elastic member refers to an occupied length of the elastic member when the elastic member is fully compressed; optionally, L1 - L2 > 0.5 mm. In this way, a compression space for the elastic member can be reserved to drive the blocking member to block/open the gas inlet.

In an implementation, the elastic member is a spring, and the solid length L2 of the elastic member is d1 × n1 + d2 + d3, where d1 is a wire diameter of the spring, n1 is a maximum number of coils of the spring in an axial direction, d2 is a thickness of an outermost coil at one end of the spring, and d3 is a thickness of the outermost coil at another end of the spring, where d2 ≤ d1, and d3 ≤ d1.

In an implementation, a plurality of limiting protrusions protrude from an outer peripheral surface of the blocking member, and the plurality of limiting protrusions are circumferentially spaced apart along the blocking member. In this way, the blocking member can be guided and limited to improve movement stability of the blocking member.

In an implementation, the blocking member includes a pressing portion and a sealing portion, along a thickness direction of the wall portion, two ends of the elastic member respectively abut against the valve cover and the pressing portion, the sealing portion is connected to a side of the pressing portion away from the valve cover, and the sealing portion is configured to block the gas inlet. In this way, sealing performance of the housing can be improved.

In an implementation, the material of the sealing portion includes ethylene propylene diene monomer, fluororubber, or Teflon.

In an implementation, the elastic member includes steel, iron, or aluminum.

In an implementation, the valve cover includes a cover side wall. The cover side wall has a second through hole extending through the cover side wall, the gas outlet is the second through hole, and along an axial direction of the valve cavity, a sealing interface between the valve core and the valve seat is higher than or flush with a bottom wall of the second through hole. In this way, gas venting can be facilitated.

In an implementation, the first vent hole includes a through hole section and a first hole section. The through hole section and the first hole section are arranged along a thickness direction of the wall portion, the first hole section is located on a side of the through hole section away from the inside of the housing, a diameter of the first hole section is larger than a diameter of the through hole section, and the one-way valve is at least partially accommodated in the first hole section. In this way, installation of the one-way valve can be facilitated.

In an implementation, the first hole section includes a circumferentially arranged hole side surface, and an outer peripheral surface of the valve cover/valve seat of the one-way valve is welded to the hole side surface. In this way, the connection strength can be improved.

In an implementation, a first step surface and a second step surface is provided on a side of the valve seat facing the valve cover, the first step surface is closer to the valve cover than the second step surface, and the outer peripheral surface of the second step is welded to the hole side surface. In this way, installation stability of the one-way valve can be improved.

In an implementation, the hole side surface matches the outer peripheral surface of the valve cover/valve seat of the one-way valve, and both the hole side wall surface and the outer peripheral surface of the valve cover/valve seat of the one-way valve are arranged at an acute angle relative to a central axis of the first vent hole, so that connection strength can be improved.

In an implementation, a stress relief groove is provided around a third welding mark between the valve cover/valve seat and the wall portion. Optionally, a first stress relief groove is provided on a side surface of the valve seat/valve cover facing the outside of the housing; and/or a second stress relief groove is provided on a side surface of the wall portion facing the outside of the housing. In this way, connection stability can be improved.

In an implementation, the breathable membrane assembly includes a breathable membrane and a connecting member. The connecting member is provided with a first breathable hole, the breathable membrane is disposed on the connecting member and covers the first breathable hole, and the breathable membrane is configured to allow gas inside the battery cell to pass through the breathable membrane and be vented. Through such arrangement, connection strength can be improved and the risk of deformation of the breathable membrane can be reduced.

In an implementation, the connecting member has a first annular platform recessed relative to a surface of the connecting member. The first annular platform is arranged around the first breathable hole, and the breathable membrane is disposed on the first annular platform. In this way, reduction of the mounting height of the breathable membrane assembly can be facilitated.

In an implementation, the breathable membrane assembly further includes a backing member. The backing member is disposed between the breathable membrane and the connecting member. A gas permeability rate of the backing member is greater than a gas permeability rate of the breathable membrane. The backing member can be provided to support the breathable membrane, reducing the risk of deformation of the breathable membrane.

In an implementation, the connecting member further has a second annular platform recessed relative to the surface of the connecting member. The second annular platform is arranged around the first breathable hole, and the backing member is disposed on the second annular platform. In this way, the mounting height of the breathable membrane assembly can be reduced.

In an implementation, the connecting member is a metal member, so that connection strength between the connecting member and other components can be improved.

In an implementation, the breathable membrane is disposed on a side of the connecting member facing the inside of the housing, and the breathable membrane covers the first breathable hole. Through such arrangement, damage to the breathable membrane from an external environment can be reduced.

In an implementation, the connecting member is welded to the wall portion. Optionally, a stress relief groove is provided around a fourth welding mark between the connecting member and the wall portion; optionally, a third stress relief groove is provided on the connecting member around the fourth welding mark between the connecting member and the wall portion; and/or a fourth stress relief groove is provided on the wall portion around the fourth welding mark between the connecting member and the wall portion. In this way, connection stability can be improved.

In an implementation, the wall portion has a first recessed platform recessed relative to the surface of the wall portion. The first recessed platform is arranged around the second vent hole, and the breathable membrane assembly is at least partially located on the first recessed platform. In this way, the mounting height of the breathable membrane assembly can be reduced.

In an implementation, the battery cell further includes an insulating member. The insulating member is disposed on a side of the wall portion facing the inside of the housing; a third vent hole and a fourth vent hole extending through the insulating member are arranged at intervals on the insulating member, the third vent hole communicates with the first vent hole on the wall portion, and the fourth vent hole communicates with the second vent hole on the wall portion. In this way, gas venting can be facilitated.

In an implementation, the first vent hole is a liquid injection hole of the battery cell. Alternatively, the first vent hole is spaced apart from the liquid injection hole. In this way, the one-way valve is used to replace an original sealing structure of the liquid injection hole, thereby facilitating simplification of a structure of the battery cell.

In an implementation, the housing includes a casing and an end cover. An accommodating cavity having an opening is formed inside the casing, where the accommodating cavity is configured to accommodate an electrode assembly. The end cover closes the opening, where the end cover is the wall portion; or the casing includes the wall portion; or the wall portion is a wall located at a top of the housing when the battery cell is in a placed state. In this way, gas venting can be facilitated.

In an implementation, the first vent hole and the second vent hole are located on a same wall portion. In this way, simplification of a structure of the battery cell can be facilitated.

In an implementation, the battery cell further includes a pressure relief mechanism. The pressure relief mechanism is disposed on the housing. The pressure relief mechanism is configured to be actuated and relieve internal pressure of the battery cell when the battery cell undergoes thermal runaway, and an actuation pressure of the pressure relief mechanism is greater than an opening pressure of the one-way valve. In this way, safety of the battery can be improved.

In an implementation, the wall portion has a pressure relief hole. The pressure relief hole communicates the inside of the housing with the outside of the housing; the pressure relief hole communicates with the pressure relief mechanism; and a diameter of the pressure relief hole is greater than a diameter of the first vent hole. In this way, a pressure relief capacity of the battery cell is improved.

In an implementation, a gas venting rate of the one-way valve is less than a gas venting rate of the pressure relief mechanism. In this way, a pressure relief capacity of the battery cell is improved.

In an implementation, a gas permeability rate of the breathable membrane is 3-10 ml/day. In this way, maintenance of internal pressure of the battery cell can be facilitated.

In an implementation, an opening pressure of the one-way valve is greater than or equal to 0.2 MPa; optionally, greater than or equal to 0.4 MPa. In this way, maintenance of internal pressure of the battery cell can be facilitated.

To resolve the above technical problem, another technical solution adopted in the present application is to provide a battery, including the above battery cell. The battery has at least the same advantages as the battery cell.

To resolve the above technical problem, another technical solution adopted in the present application is to provide an electric device, including the above battery. The electric device has at least the same advantages as the battery.

The above description is merely an overview of the technical solutions of the present application. For a better understanding of the technical means in the present application such that they can be implemented in accordance with the content of the specification, and to make the above and other purposes, features and advantages of the present application more obvious and easier to understand, specific embodiments of the present application are specifically listed below.

### BRIEF DESCRIPTION OF DRAWINGS

To describe the technical solutions in the embodiments of the present application more clearly, the following briefly describes the accompanying drawings required for describing the embodiments. Apparently, the accompanying drawings in the following description show merely some embodiments of the present application. For those of ordinary skill in the art, other drawings may be obtained based on these accompanying drawings without creative efforts.
FIG. 1 is a schematic structural exploded view of a battery cell according to one or more embodiments;
FIG. 2 is a schematic partial structural exploded view of a battery cell according to one or more embodiments;
FIG. 3 is a schematic partial structural exploded view of a battery cell according to one or more embodiments;
FIG. 4 is a schematic cross-sectional structural diagram of a one-way valve according to one or more embodiments;
FIG. 5 is a front view of a one-way valve according to one or more embodiments;
FIG. 6 is a schematic structural exploded view of a one-way valve according to one or more embodiments;
FIG. 7 is a schematic cross-sectional structural diagram of a one-way valve according to one or more embodiments;
FIG. 8 is a schematic partial cross-sectional structural diagram of a battery cell according to one or more embodiments;
FIG. 9 is a front view of a one-way valve according to one or more embodiments;
FIG. 10 is a bottom view of a one-way valve according to one or more embodiments;
FIG. 11 is a schematic structural exploded view of a one-way valve according to one or more embodiments;
FIG. 12 is a schematic cross-sectional structural diagram of a one-way valve according to one or more embodiments;
FIG. 13 is a schematic partial cross-sectional structural diagram of a battery cell according to one or more embodiments;
FIG. 14 is a front view of a one-way valve according to one or more embodiments;
FIG. 15 is a schematic structural exploded view of a one-way valve according to one or more embodiments;
FIG. 16 is a schematic partial cross-sectional structural diagram of a battery cell according to one or more embodiments;
FIG. 17 is a front view of a one-way valve according to one or more embodiments;
FIG. 18 is a schematic cross-sectional structural diagram of a one-way valve according to one or more embodiments;
FIG. 19 is a schematic diagram of a state of an elastic member according to one or more embodiments;
FIG. 20 is a schematic structural diagram of a blocking member of a one-way valve according to one or more embodiments;
FIG. 21 is a schematic cross-sectional structural diagram of a wall portion according to one or more embodiments;
FIG. 22 is a schematic cross-sectional structural diagram of a breathable membrane assembly according to one or more embodiments;
FIG. 23 is a schematic cross-sectional structural diagram of a breathable membrane assembly according to one or more embodiments;
FIG. 24 is a schematic partial cross-sectional structural diagram of a battery cell according to one or more embodiments;
FIG. 25 is a schematic partial cross-sectional structural diagram of a battery cell according to one or more embodiments;
FIG. 26 is a schematic partial cross-sectional structural diagram of a battery cell according to one or more embodiments.
FIG. 27 is a schematic partial cross-sectional structural diagram of a battery cell according to one or more embodiments.
FIG. 28 is a schematic partial cross-sectional structural diagram of a battery cell according to one or more embodiments.
FIG. 29 is a schematic structural exploded view of a battery according to one or more embodiments; and
FIG. 30 is a schematic structural diagram of a vehicle according to one or more embodiments.

In the drawings:
1000. vehicle; 300. motor; 200. controller; 100. battery; 10. enclosure; 11. first part; 12. second part; 20. battery cell; 21. end cover; 21a. outer surface; 21b. inner surface; 211. second stress relief groove; 291. first vent hole; 292. second vent hole; 22. casing; 23. electrode assembly; 24. insulating member; 293. third vent hole; 294. fourth vent hole; 25. electrode terminal; 280. through hole section; 281. first hole section; 30. one-way valve; 31. valve body; 311. valve seat; 3111. first through hole; 3112. first recess; 3113. connecting protrusion; 3114. fourth through hole; 3115. seat bottom wall; 3116. seat side wall; 311a. first stress relief groove; 311b. first step surface; 311c. second step surface; 312. valve cover; 312a. protrusion; 3121. cover top wall; 31211. first guide post; 31212. third through hole; 3122. cover side wall; 31221. second through hole; 31222. flanged wall; 31222a. connecting surface; 31222b. accommodating groove; 31222c. upper surface; 31222d. lower surface; 3123. fifth through hole; 313. valve cavity; 313a. gas inlet; 313b. gas outlet; 313c. first vent gap; 32. valve core; 321. blocking member; 3211. sealing portion; 3212. pressing portion; 3212a. limiting protrusion; 3212b. second guide post; 322. elastic member; 40. breathable membrane assembly; 41. breathable membrane; 42. metal member; 421. third stress relief groove; 491. first breathable hole; 43. backing member; 50. shielding member; 501. third vent gap; 70. pressure relief mechanism; 701. pressure relief hole; T1. first annular platform; T2. second annular platform; T3. transition surface; S1. first recessed platform; W1. first welding mark; W2. second welding mark; W3. third welding mark; and W4. fourth welding mark.

### DESCRIPTION OF EMBODIMENTS

To make the objectives, technical solutions, and effects of the present application clearer and more definite, the embodiments of the technical solutions of the present application will be described in detail below in conjunction with the accompanying drawings. The following embodiments are only used to more clearly illustrate the technical solutions of the present application, and are therefore only used as examples, and cannot be used to limit the protection scope of the present application.

Unless otherwise defined, all technical and scientific terms used herein have the same meaning as commonly understood by those skilled in the technical field to which the present application belongs. The terms used herein are only for the purpose of describing specific embodiments and are not intended to limit the present application. The terms "include", "comprise", and "have" and any variations thereof in the specification and claims of the present application and the above description of drawings are intended to cover non-exclusive inclusion.

In the description of the embodiments of the present application, the technical terms "first", "second", and the like are only used to distinguish different objects, and cannot be understood as indicating or implying relative importance or implicitly indicating the number, specific order or primary-secondary relationship of the indicated technical features. In the description of the embodiments of the present application, the term "a plurality of" refers to more than two (inclusive), and similarly, "a plurality of groups" refers to more than two (inclusive) groups, and " a plurality of pieces" refers to more than two (inclusive) pieces, unless otherwise clearly and specifically defined.

In this specification, reference to "embodiment" means that specific features, structures, or characteristics described with reference to the embodiment may be incorporated in at least one embodiment of the present application. The word "embodiment" appearing in various places in the specification does not necessarily refer to the same embodiment or an independent or alternative embodiment that is exclusive of other embodiments. Persons skilled in the art explicitly and implicitly understand that the embodiments described herein may be combined with other embodiments.

In the description of the embodiments of the present application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

Quantities, ratios and other numerical values are presented herein in a range format. It should be understood that such range formats are for convenience and brevity and should be flexibly understood to include not only the numerical values explicitly specified as range limits, but also all individual numerical values or subranges encompassed within the range, as if each numerical value and subrange were explicitly specified.

In the description of the embodiments of the present application, like reference signs represent the same components, and for the sake of brevity, detailed descriptions of the same components are omitted in different embodiments. It should be understood that, as shown in the accompanying drawings, sizes such as thickness, length, and width of various components and sizes such as thickness, length, and width of integrated devices in the embodiments of the present application are merely for illustrative purposes and should not constitute any limitations on the present application.

In the description of the embodiments of the present application, the orientation or positional relationship indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like are based on the orientation or positional relationship shown in the accompanying drawings, and are only for the convenience of describing the embodiments of the present application and simplifying the description, and do not indicate or imply that the device or element referred to must have a specific orientation, be constructed and operated in a specific orientation, and therefore cannot be understood as a limitation on the embodiments of the present application.

In the description of the embodiments of the present application, unless otherwise clearly specified and limited, the technical terms "mount", "connect", "join", "fasten" and other terms should be understood in a broad sense. For example, they may refer to a fixed connection, a detachable connection, or an integral connection, may refer to a mechanical connection or electrical connection, and may refer to a direct connection, an indirect connection via an intermediate medium, an internal communication between two components, or an interactive relationship between two components. Persons of ordinary skill in the art can understand specific meanings of these terms in the embodiments of the present application as appropriate to specific situations.

Batteries are widely used in the field of new energy, mainly including electric vehicles, energy storage systems and renewable energy. In the field of electric vehicles, higher performance such as longer driving range and fast charging has been gradually achieved. In terms of energy storage systems, batteries are widely used in large-scale and distributed energy storage. They can balance grid loads, store renewable energy such as solar and wind energy, and release stored energy during peak periods. In addition, small rechargeable batteries are also widely used in wearable devices, drones, and smart homes.

During charging and discharging process of a battery cell, some side reactions may produce gas. If the gas generated in the battery cell is not vented in a timely manner, internal pressure of the battery cell will increase, and excessively high internal pressure may have a negative impact on the performance and appearance of the battery cell. For example, in severe cases, destructive effects may be caused to the performance and appearance of the battery cell, such as liquid leakage, swelling, increased internal resistance of the battery cell, shortened venting duration and cycle life. In addition, some abnormal operations may occur during use of the battery cell, including overcharging, overdischarging, internal faults, and the like. Under such circumstances, chemical reactions inside the battery cell may be out of control, and may be accompanied by violent release of gas, and even cause thermal runaway of the battery cell. Thermal runaway of the battery cell refers to a chain reaction phenomenon triggered by various inducing factors, and a large amount of heat and harmful gases emitted by thermal runaway may cause the battery cell to catch fire or explode.

In order to improve use safety of the battery cell, a pressure relief mechanism is generally provided on a housing of the battery cell to relieve internal pressure of the battery cell through the pressure relief mechanism, thereby effectively improving use safety of the battery cell. However, instability of the internal pressure during use of the battery cell may cause premature actuation and pressure relief of the pressure relief mechanism of the battery cell, resulting in poor operational stability of the battery cell, which is not conducive to improving the service life and operational reliability of the battery cell.

Based on the above considerations, embodiments of the present application provide a battery cell, in which a venting assembly is provided on the battery cell, and the venting assembly can be used to vent the gas inside the battery cell in a timely manner to maintain the internal pressure of the battery cell stable.

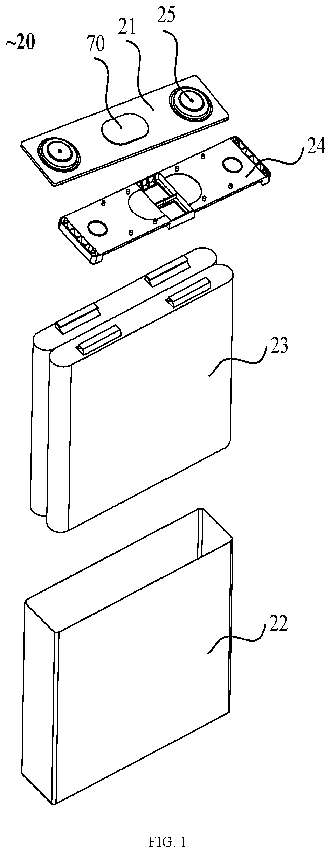

Referring to FIG. 1, FIG. 1 is a schematic structural exploded view of a battery cell according to one or more embodiments. The battery cell 20 is the smallest unit constituting a battery. As shown in FIG. 1, a battery cell 20 includes an end cover 21, a casing 22, an electrode assembly 23 and other functional components.

The end cover 21 refers to a component that covers the opening of the casing 22 to isolate an internal environment of the battery cell 20 from an external environment. Without limitation, the shape of the end cover 21 may be adapted to the shape of the casing 22 to fit the casing 22. Optionally, the end cover 21 may be made of a material (such as aluminum alloy) with certain hardness and strength, so that the end cover 21 is less likely to deform when subjected to squeezing and collision, allowing the battery cell 20 to have higher structural strength and enhanced safety performance. Functional components such as an electrode terminal 25 may be provided on the end cover 21. The electrode terminal 25 may be configured to be electrically connected to the electrode assembly 23 for outputting or inputting electric energy of the battery cell 20. Illustratively, the battery cell 20 is provided with two electrode terminals 25, and the two electrode terminals 25 are both mounted on the end cover 21. The two electrode terminals 25 are respectively configured to be electrically connected to two electrode tabs of opposite polarity in the electrode assembly 23, so as to respectively output or input electric energy of the battery cell 20 through a positive electrode and a negative electrode. In some embodiments, the end cover 21 may further be provided with a pressure relief mechanism 70 configured to relieve internal pressure when internal pressure or temperature of the battery cell 20 reaches a threshold. The end cover 21 may be made of various materials, such as copper, iron, aluminum, stainless steel, aluminum alloy, and plastic, which is not particularly limited in embodiments of the present application. In some embodiments, an insulating member 24 may further be provided on an inner side of the end cover 21. The insulating member 24 may be configured to isolate electrically connected components in the casing 22 from the end cover 21 to reduce a risk of short circuit. Illustratively, the insulating member may be plastic, rubber, or the like.

The casing 22 is a component configured to cooperate with the end cover 21 to form an internal environment of the battery cell 20, where the formed internal environment may be configured to accommodate the electrode assembly 23, an electrolyte, and other components. The casing 22 and the end cover 21 may be independent components. An opening may be formed in the casing 22, and the end cover 21 covers the opening to form the internal environment of the battery cell 20. Without limitation, the end cover 21 and the casing 22 may also be integrated. Specifically, the end cover 21 and the casing 22 may form a shared connection surface before other components are placed in the casing, and then the casing 22 is covered with the end cover 21 when the inside of the casing 22 needs to be enclosed. The casing 22 may be a variety of shapes and sizes, such as a cuboid, a cylinder, and a hexagonal prism. Specifically, a shape of the casing 22 may be determined according to a specific shape and size of the electrode assembly 23. The casing 22 may be made of various substances, such as copper, iron, aluminum, stainless steel, aluminum alloy, and plastic, which are not particularly limited in the embodiments of the present application.

The electrode assembly 23 is a component in the battery cell 20 in which electrochemical reactions occur. The casing 22 may contain one or more electrode assemblies 23. The electrode assembly 23 is mainly formed by winding or stacking a positive electrode sheet and a negative electrode sheet, and a separator is generally provided between the positive electrode sheet and the negative electrode sheet. The parts of the positive electrode sheet and the negative electrode sheet with active substances constitute the main body of the electrode assembly, and the parts of the positive electrode sheet and the negative electrode sheet without active substances respectively constitute electrode tabs. A positive electrode tab and a negative electrode tab may be located together at one end of the main body or at two ends of the main body respectively. During charging and discharging of the battery cell, a positive active substance and a negative active substance react with the electrolyte, and the electrode tabs are connected to the electrode terminals to form a current loop.

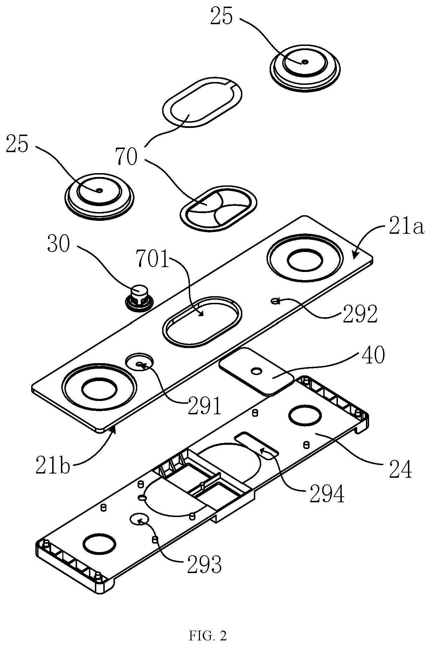

Referring to FIG. 2, FIG. 2 is a schematic partial structural exploded view of a battery cell according to one or more embodiments. According to some embodiments of the present application, the present application discloses a battery cell 20. The battery cell 20 includes a housing, a breathable membrane assembly 40, and a one-way valve 30. The housing has a wall portion, where the wall portion is provided with a first vent hole 291 and a second vent hole 292 arranged at intervals, and the first vent hole 291 and the second vent hole 292 each communicate the inside of the housing with the outside of the housing. The breathable membrane assembly 40 is disposed on the wall portion, and the breathable membrane assembly 40 covers the second vent hole 292. The one-way valve 30 is disposed on the wall portion, and the one-way valve 30 covers the first vent hole 291. The breathable membrane assembly 40 includes a breathable membrane 41. The one-way valve 30 includes a valve body 31 and a valve core 32. A valve cavity 313 is formed inside the valve body 31. The valve body 31 is provided with a gas inlet 313a and a gas outlet 313b. The gas inlet 313a is configured to communicate the valve cavity 313 with the inside of the housing, and the gas outlet 313b is configured to communicate the valve cavity 313 with the outside of the housing. The valve core 32 is disposed in the valve cavity 313, the valve core 32 is configured to block the gas inlet 313a, and the valve core 32 is configured to open the gas inlet 313a under an action of gas inside the housing and release the gas inside the battery cell 20.

The first vent hole 291 communicates the inside of the housing with the outside of the housing, and the second vent hole 292 also communicates the inside of the housing with the outside of the housing, that is, the first vent hole 291 and the second vent hole 292 are two independent holes capable of venting gas simultaneously so as to regulate the pressure inside the housing of the battery cell 20. One first vent hole 291 and one second vent hole 292 may respectively be provided on the end cover 21, or a plurality of first vent holes 291 and a plurality of second vent holes 292 may respectively be provided on the end cover 21. The battery cell 20 is configured so that gas vented through the first vent hole 291 flows through the one-way valve 30, and gas vented through the second vent hole 292 flows through the breathable membrane assembly 40. In other words, gas may be vented from the battery cell 20 simultaneously through the first vent hole 291 and the second vent hole 292. Gas vented through the first vent hole 291 flows through the one-way valve 30, and gas vented through the second vent hole 292 flows through the breathable membrane assembly 40. Alternatively, the one-way valve 30 and the breathable membrane assembly 40 are connected in parallel, that is, part of the gas is vented only through the one-way valve 30, and another part of the gas is vented only through the breathable membrane assembly 40. When a plurality of first vent holes 291 are provided, each first vent hole 291 is provided with one one-way valve 30. When a plurality of second vent holes 292 are provided, each second vent hole 292 is provided with one breathable membrane assembly 40.

In this implementation, the breathable membrane assembly 40 and the one-way valve 30 are arranged in parallel, and both can vent gas simultaneously, achieving a relatively large gas venting rate. When gas flows through the venting assembly 90, the gas may respectively flow through the one-way valve 30 and the breathable membrane assembly 40 in the venting assembly 90, that is, part of the gas is vented only through the one-way valve 30, and another part of the gas is vented only through the breathable membrane assembly 40. Since the one-way valve 30 opens to vent gas only when the internal air pressure of the battery cell 20 reaches the valve opening pressure, only one of the two components may alternatively be selected for venting gas. Specifically, when the internal air pressure of the battery cell 20 is relatively low, gas is mainly vented through the breathable membrane assembly 40. At this point, the one-way valve 30 is in a closed state and does not vent gas. When the internal air pressure of the battery cell 20 is relatively high, the one-way valve 30 opens for venting gas. At this point, the breathable membrane assembly 40 may also vent gas simultaneously. Provision of the breathable membrane assembly 40 enables the battery cell 20 to always be in a gas-ventable state, thereby reducing the problem of frequent opening of the one-way valve 30 caused by unstable internal gas pressure of the battery cell 20, reducing a risk of intrusion of external moisture, and improving sealing performance of the battery cell 20 system. Moreover, when the gas pressure is relatively low, the gas can be vented in a timely manner through the breathable membrane assembly 40, thereby facilitating adaptation to different ambient pressure environments.

In this implementation, the one-way valve 30 and the breathable membrane assembly 40 are simultaneously used to vent gas inside the housing of the battery cell 20 to the outside of the housing. Therefore, when gas is generated inside the housing during the normal use of the battery cell 20, the gas can be vented to the outside of the housing through the one-way valve 30 and the breathable membrane assembly 40, so as to alleviate the phenomenon that internal pressure of the battery cell 20 prematurely reaches a threshold due to an increase in the internal pressure of the battery cell 20, thereby reducing a risk of premature actuation and pressure relief of the battery cell 20, and further effectively improving operational stability of the battery cell 20, so as to improve the service life and operational reliability of the battery cell 20.

According to some embodiments of the present application, the housing includes an end cover 21 and a casing 22, and the wall portion may be a wall of the end cover 21 or a wall of the casing 22. That is, the breathable membrane assembly 40 and the one-way valve 30 may be disposed on the end cover 21 or on the casing 22. Alternatively, the wall portion configured to mount the breathable membrane assembly 40 and the one-way valve 30 may be the end cover 21 of the housing or a wall of the casing 22 of the housing. Illustratively, the wall portion is the end cover 21. However, the structure of the battery cell 20 is not limited thereto. In other embodiments, the wall portion may alternatively be a bottom wall opposite to the end cover 21 of the casing 22, and the wall portion may alternatively be a side wall adjacent to and connected to the end cover 21 of the casing 22. The following will take the wall portion as the wall of the end cover 21 as an example to illustrate the solution of the present application, but this should not limit the present application.

According to some embodiments of the present application, the wall portion has an outer surface 21a and an inner surface 21b arranged opposite to each other. The outer surface 21a faces the outside of the housing, and the inner surface 21b faces the inside of the housing. The valve body 31 of the one-way valve 30 is disposed on the outer surface 21a, and at least part of the valve body 31 protrudes from the outer surface 21a. The breathable membrane assembly 40 is disposed on the inner surface 21b. The wall portion may be the end cover 21. As shown in FIG. 2, the end cover 21 has an outer surface 21a and an inner surface 21b. The valve body 31 of the one-way valve 30 is disposed on the outer surface 21a, and at least part of the valve body 31 protrudes from the outer surface 21a, that is, the one-way valve 30 may be disposed on a side of the end cover 21 facing the outside of the housing. The breathable membrane assembly 40 is disposed on the inner surface 21b, which may mean that the breathable membrane assembly 40 is disposed between the end cover 21 and the insulating member 24. Through such arrangement, installation of the one-way valve 30 is facilitated, and in addition, a risk of the breathable membrane assembly 40 being damaged by the external environment is reduced.

According to some embodiments of the present application, the wall portion has an outer surface 21a and an inner surface 21b arranged opposite to each other. The outer surface 21a faces the outside of the housing, and the inner surface 21b faces the inside of the housing. The valve body 31 of the one-way valve 30 is disposed on the outer surface 21a, and at least part of the valve body 31 protrudes from the outer surface 21a. At least part of the breathable membrane assembly 40 is disposed on the outer surface 21a. The wall portion may be the end cover 21. In this implementation, both the one-way valve 30 and the breathable membrane assembly 40 may be disposed on a side of the end cover 21 facing the outside of the housing to facilitate installation of the one-way valve 30 and the breathable membrane assembly 40.

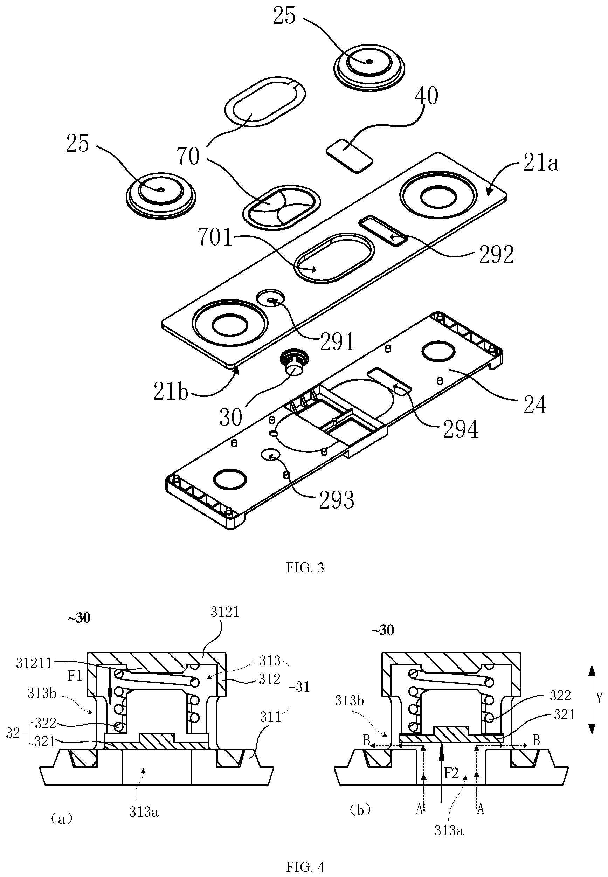

According to some embodiments of the present application, the wall portion has an outer surface 21a and an inner surface 21b arranged opposite to each other. The outer surface 21a faces the outside of the housing, and the inner surface 21b faces the inside of the housing. The valve body 31 of the one-way valve 30 is disposed on the outer surface 21a, and at least part of the valve body 31 protrudes from the inner surface 21b. At least part of the breathable membrane assembly 40 is disposed on the outer surface 21a. The wall portion can be the end cover 21. As shown in FIG. 3, FIG. 3 is a schematic partial structural exploded view of a battery cell according to one or more embodiments. The end cover 21 has an outer surface 21a and an inner surface 21b. The valve body 31 of the one-way valve 30 is disposed on the outer surface 21a, and at least part of the valve body 31 protrudes from the inner surface 21b, that is, the one-way valve 30 may be disposed on a side of the end cover 21 facing the inside of the housing. Through such arrangement, space occupied by the one-way valve 30 in a height direction of the battery cell 20 can be reduced. The breathable membrane assembly 40 is disposed on a side of the end cover 21 facing the outside of the housing, thereby facilitating installation of the breathable membrane assembly 40.

According to some embodiments of the present application, the wall portion has an outer surface 21a and an inner surface 21b arranged opposite to each other. The outer surface 21a faces the outside of the housing, and the inner surface 21b faces the inside of the housing. The valve body 31 of the one-way valve 30 is disposed on the outer surface 21a, and at least part of the valve body 31 protrudes from the inner surface 21b. The breathable membrane assembly 40 is disposed on the inner surface 21b. The wall portion may be the end cover 21. In this implementation, both the one-way valve 30 and the breathable membrane assembly 40 may be disposed on a side of the end cover 21 facing the inside of the housing, thereby reducing the height-wise space occupied by installation of the one-way valve 30 and the breathable membrane assembly 40 in the battery cell 20.

Referring to FIG. 4, FIG. 4 is a schematic cross-sectional structural diagram of a one-way valve according to one or more embodiments. According to some embodiments of the present application, the one-way valve 30 includes a valve body 31 and a valve core 32. A valve cavity 313 is formed inside the valve body 31. The valve body 31 is provided with a gas inlet 313a and a gas outlet 313b. The gas inlet 313a is configured to communicate the valve cavity 313 with the inside of the housing, and the gas outlet 313b is configured to communicate the valve cavity 313 with the outside of the housing. The valve core 32 is disposed in the valve cavity 313. The valve core 32 is configured to block the gas inlet 313a and to open the gas inlet 313a under an action of gas inside the housing and release the gas inside the battery cell 20.

The gas inlet 313a is configured to communicate the valve cavity 313 and the inside of the housing, that is, the gas inside the housing can enter the valve cavity 313 through the gas inlet 313a. The gas outlet 313b is configured to communicate the valve cavity 313 and the outside of the housing, that is, the gas in the valve cavity 313 can be vented to the outside of the housing through the gas outlet 313b. Through such arrangement, gas inside the housing of the battery cell 20 can be vented to the outside of the housing through the valve cavity 313.

Specifically, when gas inside the housing of the battery cell 20 is vented through the one-way valve 30, its venting path is as follows: inside of battery cell 20 → gas inlet 313a → valve cavity 313 → gas outlet 313b → outside of battery cell 20. The entire venting path constitutes a venting passage. As shown by the path from A to B in FIG.4(b), A is the inside side of the housing, and B is the outside side of the housing. That is, the gas inside the housing of the battery cell 20 enters the valve cavity 313 from the gas inlet 313a, flows through the valve cavity 313 and is then vented from the gas outlet 313b to the outside of the housing of the battery cell 20.

The valve core 32 is configured to block the gas inlet 313a of the valve cavity 313 and to open the gas inlet 313a under the action of gas inside the housing. The blocking of the gas inlet 313a by the valve core 32 means that gas is not allowed to enter the valve cavity 313. It may be that the valve core 32 directly blocks the gas inlet 313a, preventing gas from entering the valve cavity 313. In other implementations, the flow path of the gas is blocked, that is, the gas can enter the valve cavity 313 through the gas inlet 313a, but its flow path is blocked and cannot continue to flow to the gas outlet 313b. When the valve core 32 blocks the gas inlet 313a, gas outside the housing cannot enter the inside of the housing, and gas inside the housing cannot be vented to the outside of the housing. When the pressure of the gas inside the housing reaches a certain threshold, the gas inside the housing can push the valve core 32 to open the gas inlet 313a, so that the gas inside the housing can enter the valve cavity 313 and then be vented to the outside of the housing through the gas outlet 313b. Meanwhile, the valve core 32 allows unidirectional opening only from the inside side of the housing under pressure, enabling gas to flow out while preventing reverse opening from the outside side of the housing.

Optionally, the valve core 32 may be of various structure. For example, in FIG. 4, the valve core 32 may include an elastic member 322 and a blocking member 321. The elastic member 322 is disposed in the valve cavity 313, the blocking member 321 is movably disposed in the valve cavity 313. The blocking member 321 is configured to block the gas inlet 313a under the action of the elastic member 322, and is configured to open the gas inlet 313a under the action of the gas inside the housing.

As shown in FIG. 4, FIG. 4(a) is a schematic diagram of a one-way valve in a closed state; and FIG. 4(b) is a schematic diagram of a one-way valve in an open state. The elastic member 322 applies an elastic force F1 to the blocking member 321, such that the blocking member 321 is pressed against and block the gas inlet 313a. When the force F2 exerted by the gas inside the housing on the blocking member 321 is greater than the elastic force F1 of the elastic member 322, the gas inside the housing can overcome the elastic force of the elastic member 322 and push the blocking member 321 to open the gas inlet 313a to allow the gas inside the housing to enter the valve cavity 313 and then be vented to the outside of the housing through the gas outlet 313b. Conversely, when the gas inside the housing is vented and the force F2 exerted by the gas inside the housing on the blocking member 321 is less than the elastic force F1 of the elastic member 322, the elastic member 322 can drive the blocking member 321 back to its original position to block the gas inlet 313a.

Alternatively, when the internal gas pressure of the housing increases to a certain value P1, the force F2 exerted by the gas on the lower surface of the blocking member 321 becomes greater than the compression force F1 of the spring, the sealing interface of the valve core 32 with the valve cavity 313 fails, and the gas inside the housing enters the valve cavity 313, passes through the passage in the valve cavity 313 and is then vented to the outside of the housing through the gas outlet 313b. As the gas inside the housing is vented, the internal gas pressure decreases. When the gas pressure reaches a certain value P2, the valve core 32 closes to achieve sealing. The valve core 32 can perform repeated opening, venting, and closing, so that the internal gas pressure of the housing is maintained between P1 and P2, thereby reducing the risk of premature actuation of the pressure relief mechanism due to excessive internal gas pressure of the housing.

According to some embodiments of the present application, when the valve body 31 of the one-way valve 30 is disposed on an outer surface 21a of the wall portion, and at least part of the valve body 31 protrudes from the outer surface 21a, that is, when the one-way valve 30 is disposed on a side of the wall portion facing the outside of the housing, the one-way valve 30 may be designed in a variety of different structures.

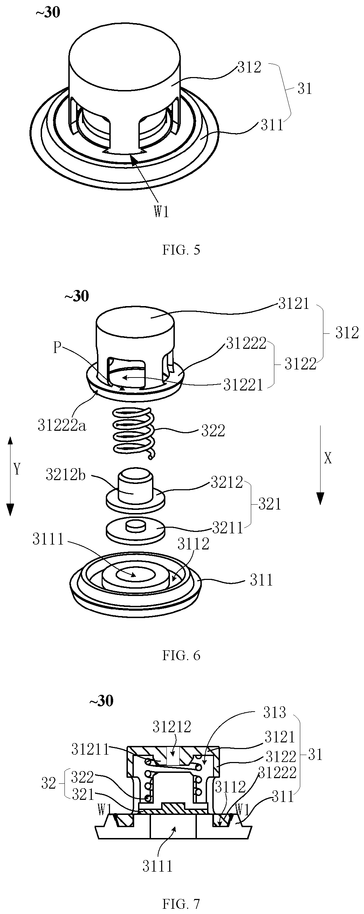

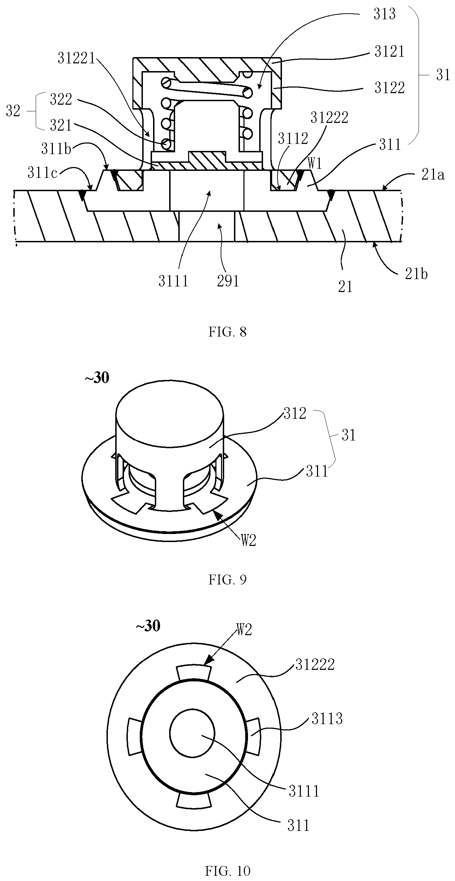

Referring to FIG. 5, FIG. 6, FIG. 7 and FIG. 8 together, FIG. 5 is a front view of a one-way valve according to one or more embodiments; FIG. 6 is a schematic structural exploded view of a one-way valve according to one or more embodiments; FIG. 7 is a schematic cross-sectional structural diagram of a one-way valve according to one or more embodiments; and FIG. 8 is a schematic partial cross-sectional structural diagram of a battery cell according to one or more embodiments. In an implementation, the valve body 31 includes a valve seat 311 and a valve cover 312. The valve cover 312 includes a cover top wall 3121 and a cover side wall 3122 connected to the cover top wall 3121. The cover top wall 3121, the cover side wall 3122, and the valve seat 311 enclose a valve cavity 313. The valve seat 311 is provided with a gas inlet 313a, and the valve cover 312 is provided with a gas outlet 313b. In this way, gas venting can be facilitated.

In this implementation, the valve body 31 of the one-way valve 30 is provided with a valve seat 311 and a valve cover 312. The one-way valve 30 with such a structure has the valve body 31 designed in two parts, thereby facilitating installation of the valve core 32 into the valve cavity 313, which is beneficial to reducing installation difficulty of the one-way valve 30.

According to some embodiments of the present application, the valve seat 311 has a first through hole 3111 extending through the valve seat 311, and the gas inlet 313a is the first through hole 3111, that is, the first through hole 3111 serves as the gas inlet 313a of the valve cavity 313. Through such arrangement, outward transmission of gas inside the battery cell 20 can be facilitated.

According to some embodiments of the present application, the cover side wall 3122 has a second through hole 31221 extending through the cover side wall 3122, and the gas outlet 313b is the second through hole 31221, that is, the second through hole 31221 serves as the gas outlet 313b of the valve cavity 313. Through such arrangement, outward transmission of gas inside the battery cell 20 can be facilitated.

According to some embodiments of the present application, along a direction away from the cover top wall 3121, the second through hole 31221 extends to the end of the cover side wall 3122.

As shown in FIG. 6, the direction away from the cover top wall 3121 is a direction from the cover top wall 3121 toward the valve seat 311 (X direction in the figure). The second through hole 31221 is formed by removing a part of the structure of the cover side wall 3122. Along the X direction, the cover side wall 3122 is directly hollowed out to the bottom end of the cover side wall 3122.

In an embodiment, along an axial direction of the valve cavity 313 (Y direction in the figure), a sealing interface between the valve core 32 and the valve seat 311 is higher than or flush with a bottom wall of the second through hole 31221. Along the X direction, a lower opening surface of the second through hole 31221 may be flush with a sealing surface between the blocking member 321 and the valve seat 311, that is, the sealing interface is higher than or flush with the bottom wall of the second through hole 31221. The so-called bottom wall of the second through hole 31221 refers to the lowest position of the second through hole 31221, such as the position indicated by arrow P in FIG. 6, where along the X direction, the lower opening surface of the second through hole 31221 is the bottom wall of the second through hole 31221. Through such arrangement, when the one-way valve 30 is opened for gas venting, that is, when the blocking member 321 opens the sealing interface, the electrolyte carried out with the gas can be vented outward in a timely manner, so that the electrolyte is less likely to accumulate on the outer edge of the blocking member 321, thereby effectively ensuring the sealing performance and repeated opening function of the one-way valve 30.

According to some embodiments of the present application, a plurality of second through holes 31221 are provided, and the plurality of second through holes 31221 are circumferentially spaced apart on the cover side wall 3122. Through such arrangement, when the one-way valve 30 is opened for gas venting, gas can be vented more quickly, shortening the gas venting time, that is, shortening a duration during which the housing of the battery cell 20 is in an open state, so as to reduce intrusion of external moisture into the battery cell 20 system during valve opening.

Referring to FIG. 7, according to some embodiments of the present application, a first guide post 31211 protrudes from a side of the cover top wall 3121 facing the valve cavity 313. The cover top wall 3121 has a third through hole 31212 extending through the cover top wall 3121 and the first guide post 31211; alternatively, the cover top wall 3121 has a third through hole 31212 extending through the cover top wall 3121, and the gas outlet 313b is the third through hole 31212.

Specifically, the first guide post 31211 protrudes from a side of the cover top wall 3121 facing the valve cavity 313. The cover top wall 3121 has a third through hole 31212 extending through the cover top wall 3121 and the first guide post 31211, and the gas outlet 313b is the third through hole 31212. That is, the third through hole 31212 serves as the gas outlet 313b of the valve cavity 313. Through such arrangement, outward transmission of gas inside the battery cell 20 can be facilitated.

With continued reference to FIG. 5, FIG. 6, FIG. 7, and FIG. 8, according to some embodiments of the present application, the valve cover 312 further includes a flanged wall 31222. The cover side wall 3122 connects the cover top wall 3121 and the flanged wall 31222. The flanged wall 31222 extends relative to the cover side wall 3122 toward a side away from the valve cavity 313, and the flanged wall 31222 is connected to the valve seat 311.

According to some embodiments of the present application, the valve cover 312 is connected to the valve seat 311. Specifically, a first recess 3112 recessed relative to a surface of the valve seat 311 is provided on a side of the valve seat 311 facing the valve cover 312, and at least part of the flanged wall 31222 is accommodated in the first recess 3112 and connected to the valve seat 311.

In this implementation, by providing the first recess 3112 on the side of the valve seat 311 facing the valve cover 312, and accommodating at least part of the flanged wall 31222 in the first recess 3112, the one-way valve 30 with such a structure can reduce the space occupied by the valve body 31 in the thickness direction of the end cover 21, and improve structural stability of the valve cover 312 installed on the valve seat 311.

According to some embodiments of the present application, the flanged wall 31222 is accommodated in the first recess 3112 and connected to the valve seat 311. The thickness of the flanged wall 31222 is less than or equal to the depth of the first recess 3112, so that after the flanged wall 31222 is connected to the valve seat 311, a surface of the flanged wall 31222 facing the cover top wall 3121 is flush with a surface of the valve seat 311 facing the valve cover 312; alternatively, the surface of the flanged wall 31222 facing the cover top wall 3121 is lower than the surface of the valve seat 311 facing the valve cover 312. As shown in FIG. 7 and FIG. 8, after the valve cover 312 is connected to the valve seat 311, the flanged wall 31222 is flush with the surface of the valve seat 311. Through such arrangement, the overall mounting height of the one-way valve 30 can be reduced.

According to some embodiments of the present application, the valve seat 311 may be made of a metal material, such as copper, iron, aluminum, steel, or aluminum alloy. Similarly, the valve cover 312 may also be made of a metal material, such as copper, iron, aluminum, steel, or aluminum alloy. The valve seat 311 and the valve cover 312 may be made of the same material or different materials. The valve cover 312 and the valve seat 311 may be assembled by welding (such as laser welding). Alternatively, they may be assembled by a mechanical interference fit, provided that a static friction generated by the interference fit is greater than a restoring force of the elastic member 322.

According to some embodiments of the present application, the flanged wall 31222 is welded to the valve seat 311. In a circumferential direction of the cover side wall 3122, at least part of the first welding mark W1 between the flanged wall 31222 and the valve seat 311 is offset from the second through hole 31221 on the cover side wall 3122.

The flanged wall 31222 is an annular component with a certain thickness, and an outer peripheral surface of the flanged wall 31222 serves as a connecting surface 31222a and is welded to a groove wall surface of the first recess 3112. Further, the connecting surface 31222a of the flanged wall 31222 may be configured as an inclined surface, and accordingly the groove wall surface of the first recess 3112 may also be configured as an inclined surface, so that the connecting surface 31222a of the flanged wall 31222 matches the groove wall surface of the first recess 3112. As shown in FIG. 7 and FIG. 8, the flanged wall 31222 and the first recess 3112 may form an interlocking structure. In this way, welding quality can be improved, and strength and stability of the connection can be enhanced. Furthermore, the valve cover 312 and the valve seat 311 are preferably made of the same material so as to achieve better welding quality.

According to some embodiments of the present application, in the circumferential direction of the cover side wall 3122, at least part of the first welding mark W1 formed between the flanged wall 31222 and the valve seat 311 is offset from the second through hole 31221. As shown in FIG. 5, welding may be performed at a position on the cover side wall 3122 without the second through hole 31221. A plurality of first welding marks W1 may be provided, and the plurality of first welding marks W1 are distributed in the circumferential direction of the cover side wall 3122, which may mean that the distribution of the first welding marks W1 is offset from the distribution of the second through holes 31221. In other words, a plurality of second through holes 31221 are circumferentially spaced apart on the cover side wall 3122, solid wall sections are present at positions between adjacent second through holes 31221, and welding is performed at the positions with a solid wall section. The first welding mark W1 herein refers to a welding site or welding position between the flanged wall 31222 and the valve seat 311, and does not indicate that a welding mark is present on the actual product. Whether a visible welding mark is present depends on the welding process and should not be construed as limiting. In this way, the solid walls provide a certain heat blocking effect, which can protect the blocking member 321 of the valve core 32, reducing the impact of high temperature during welding on the blocking member 321, so as to prevent thermal deformation of the blocking member 321 and failure of the sealing interface when the valve is in a closed state.

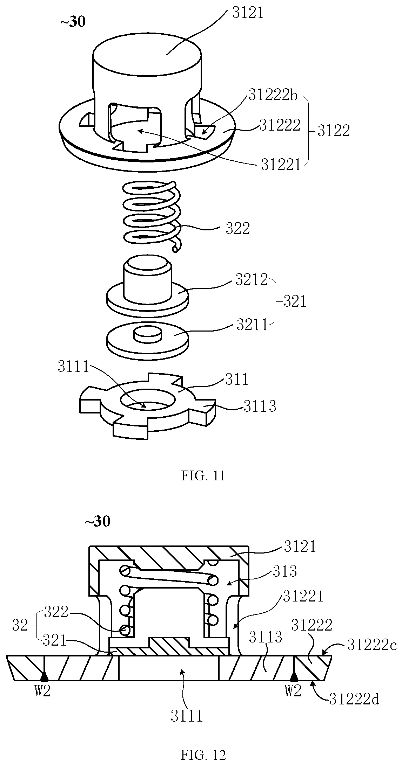

Referring to FIG. 9, FIG. 10, FIG. 11, and FIG. 12 together, FIG. 9 is a front view of a one-way valve according to one or more embodiments, FIG. 10 is a bottom view of a one-way valve according to one or more embodiments, and FIG. 11 is a schematic structural exploded view of a one-way valve according to one or more embodiments; and FIG. 12 is a schematic cross-sectional structural diagram of a one-way valve according to one or more embodiments. According to some embodiments of the present application, the valve seat 311 is connected to the valve cover 312. Specifically, the valve cover 312 includes a flanged wall 31222, and the valve seat 311 is connected to the flanged wall 31222. In other words, the valve seat 311 is connected to the flanged wall 31222 of the valve cover 312.

According to some embodiments of the present application, a connecting protrusion 3113 protrudes from the outer peripheral surface of the valve seat 311, an accommodating groove 31222b is provided on the inner peripheral surface of the flanged wall 31222, and the connecting protrusion 3113 is accommodated in the accommodating groove 31222b and connected to the flanged wall 31222.

A plurality of connecting protrusions 3113 are provided, and the plurality of connecting protrusions 3113 are circumferentially spaced apart along the valve seat 311. Correspondingly, a plurality of accommodating grooves 31222b are provided, and the number of the connection protrusions 3113 is the same as the number of the accommodating grooves 31222b. The shape of each connection protrusion 3113 matches the shape of the corresponding accommodating groove 31222b, so that the connecting protrusion 3113 can be accommodated in the accommodating groove 31222b. Through such arrangement, after the valve cover 312 is connected to the valve seat 311, the surface of the flanged wall 31222 and the valve seat 311 is flush. In this way, the valve seat 311 will be embedded in the valve cover 312, which can reduce the overall mounting height of the one-way valve 30. Comparing with FIG. 8 and FIG. 12, in the solution shown in FIG. 8, the valve cover 312 is connected to the valve seat 311, and its mounting height is the thickness of the valve cover 312 plus a part of the thickness of the valve seat 311; while in the solution shown in FIG. 12, the valve seat 311 is connected to the valve cover 312 and is completely accommodated therein, such that its mounting height is the thickness of the valve cover 312, and compared with the former solution, this implementation provides a lower mounting height and reduced space occupancy.

According to some embodiments of the present application, the connecting protrusions 3113 are welded to the flanged wall 31222. The flanged wall 31222 has an upper surface 31222c and a lower surface 31222d arranged opposite to each other. The upper surface 31222c faces the cover top wall 3121. A second welding mark W2 formed between the connecting protrusion 3113 and the flanged wall 31222 of the cover side wall 3122 is located on the lower surface 31222d of the flanged wall 31222. That is, welding is performed from the lower side of the valve cover 312 and the valve seat 311. As shown in FIG. 12, the second welding mark W2 is located on a side away from the valve cavity 313. In this way, the valve seat 311 and the flanged wall 31222 provide a certain heat blocking effect, which can protect the blocking member 321 of the valve core 32, reducing the impact of high temperature during welding on the blocking member 321, so as to prevent thermal deformation of the blocking member 321 and failure of the sealing interface when the valve is in a closed state.

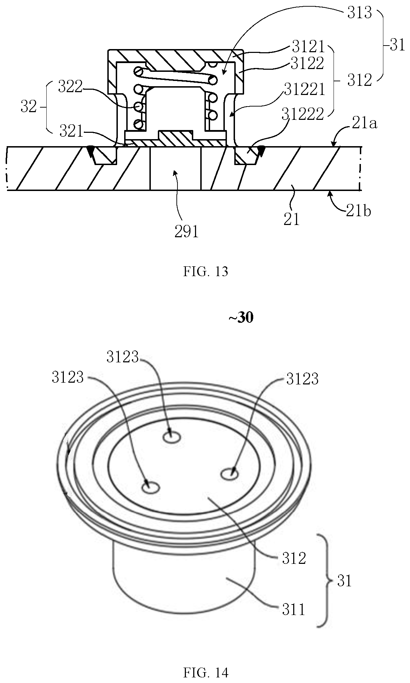

Referring to FIG. 13, FIG. 13 is a schematic partial cross-sectional structural diagram of a battery cell according to one or more embodiments. In this implementation, the one-way valve 30 includes a valve body 31 and a valve core 32. A valve cavity 313 is formed inside the valve body 31, and the valve core 32 is disposed in the valve cavity 313. The valve body 31 includes a valve cover 312. The valve cover 312 includes a cover top wall 3121 and a cover side wall 3122 connected to the cover top wall 3121. The cover top wall 3121, the cover side wall 3122, and the end cover 21 enclose the valve cavity 313. The end cover 21 is provided with a gas inlet of the valve cavity 313 to communicate the valve cavity 313 with the inside of the housing; and the valve cover 312 is provided with a gas outlet of the valve cavity 313 to communicate the valve cavity 313 with the outside of the housing.

In this implementation, the valve body 31 of the one-way valve 30 may have only the valve cover 312 without the valve seat 311, and the valve cover 312 is directly connected to the end cover 21; or in other words, the end cover 21 may serve as the valve seat 311 of the valve body 31. In this way, the mounting height of the one-way valve 30 can be reduced. Comparing FIG. 8, FIG. 12, and FIG. 13, in the solution shown in FIG. 8, the valve cover 312 is connected to the valve seat 311, and its mounting height is the thickness of the valve cover 312 plus a part of the thickness of the valve seat 311 and a part of the thickness of the end cover 21; in the solution shown in FIG. 12, the valve seat 311 is connected to the valve cover 312 and is completely accommodated therein, and its mounting height is the thickness of the valve cover 312 plus a part of the thickness of the end cover 21; while in the solution shown in FIG. 13, the valve cover 312 may be embedded in the end cover 21, and its mounting height may be the thickness of the end cover 21, and compared with the former two solutions, this implementation provides a lower mounting height and reduced space occupancy.

According to some embodiments of the present application, the end cover 21 is provided with a first vent hole 291. The first vent hole 291 communicates the inside of the housing with the valve cavity 313. The gas inlet of the valve cavity 313 is the first vent hole 291, that is, the first vent hole 291 serves as the gas inlet of the valve cavity 313. The cover side wall 3122 has a second through hole 31221 extending through the cover side wall 3122, and the gas outlet of the valve cavity 313 is the second through hole 31221, that is, the second through hole 31221 serves as the gas outlet of the valve cavity 313. Through such arrangement, outward transmission of gas inside the battery cell can be facilitated. In other implementations, the gas outlet may alternatively be located on the cover top wall and may be a third through hole extending through the cover top wall. Reference may be made to FIG. 7 and the previous description for details, which will not be repeated herein.

According to some embodiments of the present application, a side of the end cover 21 facing the outside of the housing is provided with a second recess (not shown in the figure) recessed relative to the outer surface 21a of the end cover 21. The valve cover 312 further includes a flanged wall 31222. The cover side wall 3122 connects the cover top wall 3121 and the flanged wall 31222. The flanged wall 31222 extends relative to the cover side wall 3122 toward a side away from the valve cavity 313. At least part of the flanged wall 31222 is accommodated in the second recess and connected to the end cover 21.

In this implementation, by providing a second recess on the side of the end cover 21 facing the outside of the housing and accommodating at least part of the flanged wall 31222 in the second recess, the one-way valve 30 with such a structure can reduce the space occupied by the valve body 31 in the thickness direction of the end cover 21.

According to some embodiments of the present application, the flanged wall 31222 is accommodated in the second recess and connected to the end cover 21. The thickness of the flanged wall 31222 is less than or equal to the depth of the second recess, so that after the flanged wall 31222 is connected to the end cover 21, a surface of the flanged wall 31222 facing the cover top wall 3121 is flush with a surface of the end cover 21 facing the outside of the housing; or the surface of the flanged wall 31222 facing the cover top wall 3121 is lower than the surface of the end cover 21 facing the outside of the housing. As shown in FIG. 13, after the valve cover 312 is connected to the end cover 21, the flanged wall 31222 is flush with the outer surface 21a of the end cover 21. Through such arrangement, the mounting height of the one-way valve 30 can be reduced.

According to some embodiments of the present application, the flanged wall 31222 is welded to the end cover 21. Specifically, the flanged wall 31222 is an annular component with a certain thickness, and the outer peripheral surface of the flanged wall 31222 serves as a connecting surface 31222a and is welded to a groove wall surface of the second recess. Further, the connecting surface 31222a of the flanged wall 31222 may be configured as an inclined surface, and accordingly the groove wall surface of the second recess may also be configured as an inclined surface, so that the connecting surface 31222a of the flanged wall 31222 matches the groove wall surface of the second recess. As shown in FIG. 13, the flanged wall 31222 and the second recess may form an interlocking structure. In this way, welding quality can be improved, and strength and stability of the connection can be enhanced. Furthermore, the valve cover 312 and the valve seat 311 are preferably made of the same material so as to achieve better welding quality. For example, both may be made of aluminum.

According to some embodiments of the present application, when the valve body 31 of the one-way valve 30 is disposed on the outer surface 21a of the wall portion, at least part of the valve body 31 protrudes from the inner surface 21b of the wall portion, that is, when the one-way valve 30 is disposed on a side of the wall portion facing the inside of the housing, or when the valve body 31 extends along the thickness direction of the end cover 21 to the inside of the housing, the one-way valve 30 may be designed in a variety of different structures.

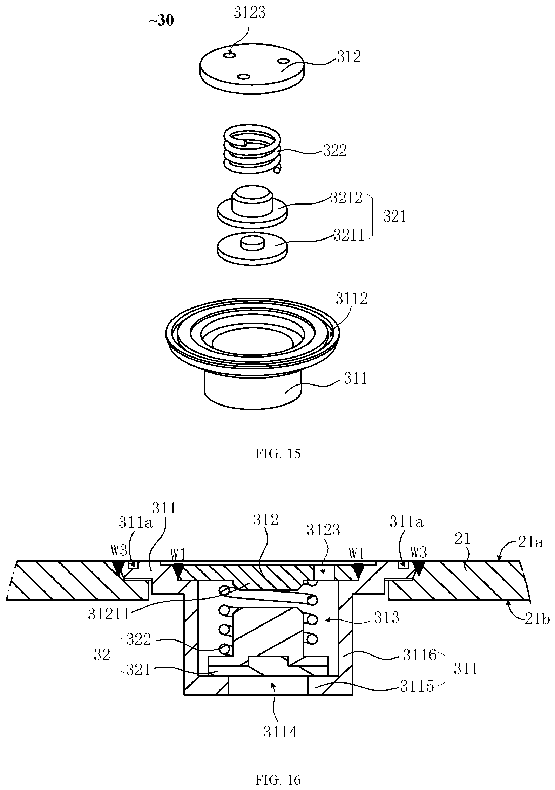

Referring to FIG. 14, FIG. 15, and FIG. 16 together, FIG. 14 is a front view of a one-way valve according to one or more embodiments, FIG. 15 is a schematic structural exploded view of a one-way valve according to one or more embodiments, and FIG. 16 is a schematic partial cross-sectional structural diagram of a battery cell according to one or more embodiments. According to some embodiments of the present application, the one-way valve 30 includes a valve body 31 and a valve core 32. A valve cavity 313 is formed inside the valve body 31, and the valve core 32 is disposed in the valve cavity 313. The valve body 31 includes a valve seat 311 and a valve cover 312. The valve seat 311 includes a seat bottom wall 3115 and a seat side wall 3116 connected to the seat bottom wall 3115. The valve cover 312 is disposed at an end of the valve seat 311 away from the seat bottom wall 3115. The valve cover 312, the seat side wall 3116, and the seat bottom wall 3115 enclose to form the valve cavity 313. The valve seat 311 is provided with a gas inlet of the valve cavity 313 to communicate the valve cavity 313 with the inside of the housing.

In this implementation, the valve body 31 of the one-way valve 30 is provided with a valve seat 311 and a valve cover 312. The one-way valve 30 with such a structure has the valve body 31 designed in two parts, thereby facilitating installation of the valve core 32 into the valve cavity 313, which is beneficial to reducing installation difficulty of the one-way valve 30.

With continued reference to FIG. 14, FIG. 15, and FIG. 16, according to some embodiments of the present application, the valve seat 311 has a fourth through hole 3114 extending through the seat bottom wall 3115, and the gas inlet is the fourth through hole 3114, that is, the fourth through hole 3114 serves as the gas inlet of the valve cavity 313. Alternatively, in other embodiments, the gas inlet may be provided on an outer peripheral surface of the part of the valve body 31 extending into the housing. When the gas inlet is provided on the outer peripheral surface of the part of the valve body 31 extending into the housing, the arrangement direction of the valve core 32 is changed accordingly, and the blocking member 321 is movably disposed in the valve cavity 313 along the radial direction of the valve seat 311, enabling the valve core to block the gas inlet.

With continued reference to FIG. 14, FIG. 15, and FIG. 16, according to some embodiments of the present application, the gas outlet may be directly formed in the valve cover 312, that is, the gas outlet is a passage provided on the valve cover 312. Specifically, the valve cover 312 has a fifth through hole 3123 extending through the valve cover 312. The gas outlet includes the fifth through hole 3123, that is, the fifth through hole 3123 serves as the gas outlet of the valve cavity 313. Through such arrangement, outward transmission of gas inside the battery cell can be facilitated.

One or more fifth through holes 3123 may be provided in the valve cover 312. Illustratively, in FIG. 14 and FIG. 15, three fifth through holes 3123 are provided in the valve cover 312. However, in other embodiments, two, four, five, six, or other number of fifth through holes 3123 may be provided in the valve cover 312. In an example, a plurality of fifth through holes 3123 are provided in the valve cover 312, and the plurality of fifth through holes 3123 are arranged at equal intervals. In an example, a plurality of fifth through holes 3123 are arranged at equal intervals around the center of the valve cover 312, which can make gas flow out more smoothly.

By providing fifth through holes 3123 in the valve cover 312 of the valve body 31 to form the gas outlet of the valve body 31, the valve cavity 313 of the valve body 31 can communicate with the outside of the housing through the fifth through holes 3123 provided in the valve cover 312. The valve body 31 with such a structure can reduce the interference by the gas outlet on the connection between the valve cover 312 and the valve seat 311, which is beneficial to reducing assembly difficulty of the valve cover 312 and the valve seat 311.

With continued reference to FIG. 16, according to some embodiments of the present application, a first guide post 31211 protrudes from a side of the valve cover 312 facing the valve cavity. The valve cover 312 may also be provided with a third through hole (not shown in FIG. 16, referring to FIG. 7 for details) extending through the valve cover 312 and the first guide post 31211, and the gas outlet is the third through hole. That is, the third through hole serves as the gas outlet of the valve cavity 313. Through such arrangement, outward transmission of gas inside the battery cell can be facilitated.

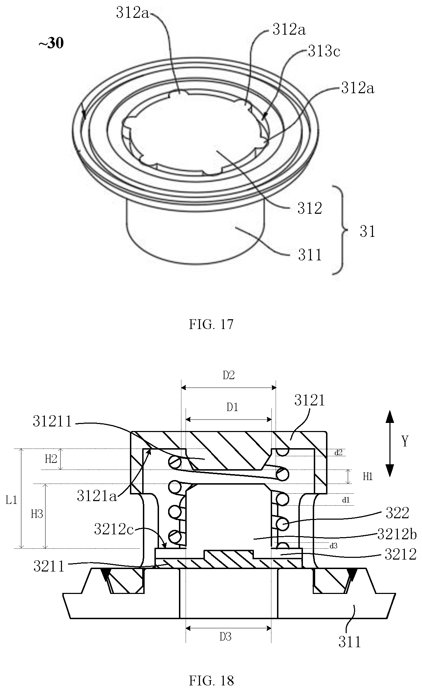

Referring to FIG. 17, FIG. 17 is a front view of a one-way valve according to one or more embodiments. According to some embodiments of the present application, the gas outlet may alternatively be provided between the valve cover 312 and the valve seat 311, that is, the gas outlet is a gap formed between the valve cover 312 and the valve seat 311. Specifically, the valve cover 312 is connected to the valve seat 311, and the gas outlet includes a first vent gap 313c formed between the valve cover 312 and the valve seat 311.

A plurality of protrusions 312a protrude from an outer peripheral surface of the valve cover 312. The plurality of protrusions 312a are circumferentially spaced apart along the valve cover 312. The protrusions 312a are in interference fit with the valve seat 311. A first vent gap 313c is formed between a region of the outer peripheral surface of the valve cover 312 without the protrusions 312a and the valve seat 311, that is, in the circumferential direction of the valve cover 312, the gas outlet is formed between two adjacent protrusions 312a. By providing a first vent gap 313c between the valve cover 312 and the valve seat 311 to form the gas outlet of the valve cavity 313, the valve cavity 313 of the valve body 31 can communicate with the outside of the housing through the first vent gap 313c formed between the valve cover 312 and the valve seat 311. The structure is simple and easy to process.

According to some embodiments of the present application, the valve cover 312 may be connected to the valve seat 311, and then the valve seat 311 is connected to the end cover 21. Specifically, a first recess 3112 is provided at an end of the valve seat 311 away from the seat bottom wall 3115, and at least part of the valve cover 312 is accommodated in the first recess 3112. That is, the valve cover 312 may be entirely located in the first recess 3112, or partially located in the first recess 3112. In other words, the valve cover 312 may extend out of the first recess 3112 or not extend out of the first recess 3112. By providing a first recess 3112 on the valve seat 311 and accommodating at least part of the valve cover 312 in the first recess 3112, the one-way valve 30 with such a structure can reduce space occupied by the valve body 31, and improve structural stability of the valve cover 312 installed on the valve seat 311, while also providing a certain protective effect on the valve cover 312 , thereby reducing wear or damage to the valve cover 312.

According to some embodiments of the present application, the valve cover 312 and the valve seat 311 may alternatively be connected to the end cover 21 respectively. Specifically, the valve cover 312 is connected to the end cover 21, and the gas outlet includes a second vent gap (not shown) formed between the valve cover 312 and the end cover 21. The valve cover 312 is connected to the end cover 21, so that the valve cover 312 and the valve seat 311 jointly define a valve cavity 313 for accommodating the valve core 32. When the valve is opened, the blocking member 321 uncovers the fourth through hole 3114, and gas enters the valve cavity 313. In this case, any opening or gap on the upper part of the valve cavity 313 can serve as a gas outlet. In other words, the blocking member 321 controls the sealing of the battery cell, while other regions of the valve cavity do not bear the sealing function and may be provided with openings or gaps to vent gas inside the valve cavity. The second vent gap between the valve cover 312 and the end cover 21 may be a gap left by partial welding. Alternatively, protrusions may be provided on the connecting surfaces of the valve cover 312 and the end cover 21, such that the valve cover 312 and the end cover 21 are connected through the protrusions, while regions without protrusions form the second venting gap.

According to some embodiments of the present application, the one-way valve 30 is disposed on the end cover 21. The valve body 31 of the one-way valve 30 faces the inside of the housing and at least part of the valve body 31 protrudes from the inner surface 21b of the end cover 21. The one-way valve 30 includes a valve body 31 and a valve core 32. A valve cavity 313 is formed inside the valve body 31, and the valve core 32 is disposed in the valve cavity 313. The valve body 31 includes a valve seat 311. The valve seat 311 includes a seat bottom wall 3115 and a seat side wall 3116 connected to the seat bottom wall 3115. The seat bottom wall 3115, the seat side wall 3116, and the end cover 21 enclose the valve cavity 313. The end cover 21 is provided with a gas outlet of the valve cavity 313, for example, the first vent hole 291 may serve as the gas outlet to communicate the valve cavity 313 with the outside of the housing. The valve seat 311 is provided with a gas inlet of the valve cavity 313 to communicate the valve cavity 313 with the inside of the housing, for example, a fourth through hole 3114 extending through the seat bottom wall 3115 may serve as the gas inlet. In this implementation, the valve body 31 of the one-way valve 30 may have only the valve seat 311 without the valve cover 312, and the valve seat 311 is directly connected to the end cover 21; or in other words, the end cover 21 may serve as the valve cover 312 of the valve body 31. In this way, the mounting height of the one-way valve 30 can be reduced.

According to some embodiments of the present application, a side of the end cover 21 facing the inside of the housing is provided with a third recess (not shown) recessed relative to the inner surface 21b of the end cover 21. At least part of the seat side wall 3116 is accommodated in the third recess and connected to the end cover 21. The connection method is the same as that between the flanged wall 31222 and the end cover 21 in the embodiment shown in FIG. 13, which is not repeated herein. In this implementation, by providing a third recess on the side of the end cover 21 facing the inside of the housing and accommodating at least part of the seat side wall 3116 in the third recess, the one-way valve 30 with such a structure can reduce space occupied by the valve body 31 in the thickness direction of the end cover 21.

According to some embodiments of the present application, the one-way valve 30 includes a valve body 31 and a valve core 32. A valve cavity 313 is formed inside the valve body 31. The valve core 32 is disposed in the valve cavity 313. The valve core 32 is configured to block the gas inlet 313a. The valve core 32 is configured to open the gas inlet 313a under the action of gas inside the housing and release the gas inside the battery cell 20. The valve core 32 may be of various structure. For example, in FIG. 4, the valve core 32 may include an elastic member 322 and a blocking member 321. The elastic member 322 is disposed in the valve cavity 313, the blocking member 321 is movably disposed in the valve cavity 313. The blocking member 321 is configured to block the gas inlet 313a under the action of the elastic member 322, and is configured to open the gas inlet 313a under the action of the gas inside the housing.

Referring to FIG. 4 and FIG. 18 together, FIG. 18 is a schematic cross-sectional structural diagram of a one-way valve according to one or more embodiments. According to some embodiments of the present application, the elastic member 322 is arranged along the axial direction Y of the valve cavity 313. Two ends of the elastic member 322 respectively abut against the blocking member 321 and a cavity top surface of the valve cavity 313. The elastic member 322 is located between the cavity top surface of the valve cavity 313 and the blocking member 321 in a compressed state, enabling the elastic member 322 to apply an elastic force to the blocking member 321, so that the blocking member 321 can abut against a cavity bottom surface of the valve cavity 313 to block the gas inlet 313a.

According to some embodiments of the present application, the valve body 31 includes a valve seat 311 and a valve cover 312. The valve cover 312 and the valve seat 311 enclose a valve cavity 313. Two ends of the elastic member 322 respectively abut against the blocking member 321 and the cover top wall 3121 of the valve cover 312. The valve body 31 includes a valve cover 312. A first guide post 31211 protrudes from a side of the valve cover 312 facing the valve cavity 313. A part of the elastic member 322 is sleeved on the outer side of the first guide post 31211 to achieve positioning of the elastic member 322.

In an implementation, a second guide post 3212b protrudes from a side of the blocking member 321 facing the valve cover 312, and a part of the elastic member 322 is sleeved on the outer side of the second guide post 3212b.

The one-way valve 30 with such a structure can provide positioning support for the elastic member 322 through the first guide post 31211 and the second guide post 3212b, so as to facilitate installation of the elastic member 322, which is beneficial to reducing installation difficulty of the elastic member 322. In addition, the first guide post 31211 and the second guide post 3212b can provide guidance when the elastic member 322 is compressed, so as to reduce radial deformation of the elastic member 322 during compression, thereby enabling the elastic member 322 to be stably compressed, which is beneficial to improving operational reliability of the elastic member 322, and lowering the risk of the blocking member 321 unintentionally opening the gas inlet 313a. The elastic member 322 may be a spring. However, in other embodiments, the elastic member 322 may alternatively be an elastic sheet or elastic rubber, or the like. The elastic member 322 may be made of steel, iron, aluminum, or the like.

According to some embodiments of the present application, a diameter of the first guide post 31211 is D1, and an inner diameter of the elastic member 322 is D2, satisfying 0 mm < D2 - D1 ≤ 5 mm.

The elastic member 322 is a spring, and the inner diameter D2 of the elastic member 322 is a diameter of the cavity formed inside the spring. 0 mm < D2 - D1 ≤ 5 mm, that is, when the first guide post 31211 and the elastic member 322 are arranged coaxially, a dimension of the gap between the first guide post 31211 and the elastic member 322 is greater than 0 mm and less than or equal to 5 mm.

Illustratively, a difference between the inner diameter of the elastic member 322 and the diameter of the first guide post 31211 may be 0 mm, 0.1 mm, 0.2 mm, 0.5 mm, 0.8 mm, 1 mm, 1.2 mm, 1.5 mm, 2 mm, 2.5 mm, 3 mm, 3.5 mm, 4 mm, 4.5 mm, 5 mm, or the like.

By configuring the difference between the inner diameter of the elastic member 322 and the diameter of the first guide post 31211 to be greater than 0 mm and less than or equal to 5 mm, inconvenience in installing the elastic member 322 onto the first guide post 31211 due to the difference between the inner diameter of the elastic member 322 and the diameter of the first guide post 31211 being less than or equal to 0 mm can be avoided, thereby reducing rubbing during the process of the elastic member 322 being sleeved on the first guide post 31211. In addition, an excessively large gap between the elastic member 322 and the first guide post 31211 due to the difference between the inner diameter of the elastic member 322 and the diameter of the first guide post 31211 being excessively large can be avoided, thereby reducing radial movement or radial deformation of the elastic member 322, thereby improving uniformity of the elastic force of the elastic member 322 acting on the blocking member 321, so as to reduce the risk of the blocking member 321 unintentionally opening the gas inlet 313a.

According to some embodiments of the present application, a diameter of the second guide post 3212b is D3, where the diameter of the second guide post 3212b refers to a diameter of the main body of the second guide post 3212b and does not include the region provided with the limiting protrusion 3212a on the second guide post 3212b. An inner diameter of the elastic member 322 is D2, satisfying 0 mm < D3 - D1 ≤ 5 mm.

The elastic member 322 is a spring, and the inner diameter D2 of the elastic member 322 is a diameter of the cavity formed inside the spring.

0 mm < D3 - D1 ≤ 5 mm, that is, when the second guide post 3212b and the elastic member 322 are arranged coaxially, a dimension of the gap between the second guide post 3212b and the elastic member 322 is greater than 0 mm and less than or equal to 5 mm.

Illustratively, a difference between the inner diameter of the elastic member 322 and the diameter of the second guide post 3212b may be 0 mm, 0.1 mm, 0.2 mm, 0.5 mm, 0.8 mm, 1 mm, 1.2 mm, 1.5 mm, 2 mm, 2.5 mm, 3 mm, 3.5 mm, 4 mm, 4.5 mm, 5 mm, or the like.

By configuring the difference between the inner diameter of the elastic member 322 and the diameter of the second guide post 3212b to be greater than 0 mm and less than or equal to 5 mm, inconvenience in installing the elastic member 322 onto the second guide post 3212b due to the difference between the inner diameter of the elastic member 322 and the diameter of the second guide post 3212b being less than or equal to 0 can be avoided, thereby reducing rubbing during the process of the elastic member 322 being sleeved on the second guide post 3212b. In addition, an excessively large gap between the elastic member 322 and the second guide post 3212b due to the difference between the inner diameter of the elastic member 322 and the diameter of the second guide post 3212b being excessively large can be avoided, thereby reducing radial movement or radial deformation of the elastic member 322, thereby improving uniformity of the elastic force of the elastic member 322 acting on the blocking member 321, so as to reduce the risk of the blocking member 321 unintentionally opening the gas inlet 313a.

According to some embodiments of the present application, in an axial direction of the valve cavity 313 (Y direction), two ends of the elastic member 322 respectively abut against the valve cover 312 and the blocking member 321, a distance between a first abutting surface of the valve cover 312 and a second abutting surface of the blocking member 321 is L1, and L1 defines an installation space of the elastic member 322. The two ends of the elastic member 322 respectively abut against a side surface of the valve cover 312 facing the valve cavity 313 and a side surface of the blocking member 321 facing the valve cover 312, and the distance between the two is the installation space L1 of the elastic member 322. Specifically, the cover top wall 3121 has a first abutting surface 3121a facing the valve cavity 313, the blocking member 321 has a second abutting surface 3212c facing the cover top wall 3121, and L1 is the distance between the first abutting surface 3121a and the second abutting surface 3212c. The first abutting surface 3121a and the second abutting surface 3212c are surfaces on the valve cover 312 and the blocking member 321, respectively, that abut against the elastic member 322.

According to some embodiments of the present application, in an axial direction of the elastic member 322, a gap is present between an end surface of the first guide post 31211 away from the valve cover 312 and an end surface of the second guide post 3212b close to the valve cover 312. The gap can provide space for the movement of the blocking member 321.

According to some embodiments of the present application, along an axial direction Y of the valve cavity 313, a dimension of the gap between the valve cover 312 and the blocking member 321 is H1, satisfying 0 mm < H1 ≤ 0.5 mm. In an implementation, the gap dimension H1 between the valve cover 312 and the blocking member 321 is a gap dimension under the condition that the blocking member 321 blocks the gas inlet 313a.

A first guide post 31211 protrudes from a side of the valve cover 312 facing the valve cavity 313, a second guide post 3212b protrudes from a side of the blocking member 321 facing the valve cover 312, and the gap between the valve cover 312 and the blocking member 321 is a gap between an end surface of the first guide post 31211 away from the valve cover 312 and an end surface of the second guide post 3212b close to the valve cover 312, as shown by H1 in FIG. 18. In other words, in the axial direction Y of the valve cavity 313, a sum of a height H2 of the first guide post 31211 and a height H3 of the second guide post 3212b is less than the installation space L1 for the elastic member 322, that is, in the axial direction, the height H2 of the first guide post 31211 + the height H3 of the second guide post 3212b is less than the spring compression space L1.

Illustratively, the dimension H1 of the gap between the valve cover 312 and the blocking member 321 may be 0.1 mm, 0.2 mm, 0.3 mm, 0.4 mm, 0.5 mm, or the like.

By configuring the dimension of the gap between the valve cover 312 and the blocking member 321 in the axial direction Y to be greater than 0 mm and less than or equal to 5 mm, interference of the valve cover 312 with movement of the blocking member 321 can be reduced, so that a space is provided between the valve cover 312 and the blocking member 321 to allow movement of the blocking member 321 along the axial direction Y. Accordingly, when gas inside the housing pushes the blocking member 321, the blocking member 321 can open the gas inlet 313a to vent gas. In addition, an excessive space occupied by the one-way valve 30 in the axial direction Y due to an excessively large gap between the valve cover 312 and the blocking member 321 can be avoided, which is beneficial to improving space utilization of the battery cell 20.

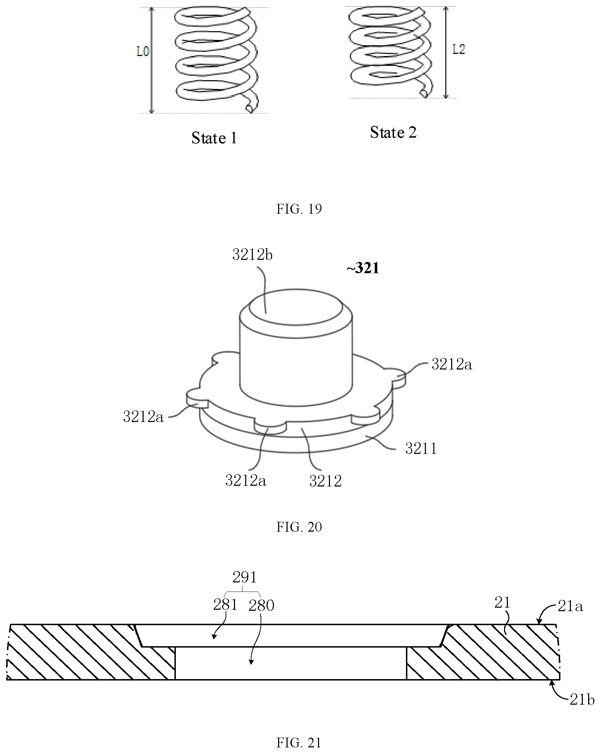

Referring to FIG. 19, FIG. 19 is a schematic diagram of the state of the elastic member according to one or more embodiments. Taking the elastic member 322 being a spring as an example, an initial length L0 of the spring is the natural length of the spring before being compressed. By configuring L0>L1, the spring can provide an initial elastic force after being installed in the valve cavity 313 for pressing the blocking member 321 against the bottom surface of the valve cavity, thereby improving the sealing performance.

Further, a solid length L2 of the spring is configured so that L1 > L2. The solid length of the spring is a length occupied by the spring body after the spring is completely compacted. As shown in FIG. 19, state 1 in FIG. 19 is a state in which the spring is not compressed, and in this state, a gap is present between the solid structures of the spring, and the spring can be further compressed. State 2 in FIG. 19 is a state after the spring is completely compressed, and in this state, no gap exists between the solid structures of the spring, and the spring cannot be further compressed. The solid length L2 of the spring is d1 × n1 + d2 + d3, where d1 is a wire diameter of the spring, n1 is a maximum number of coils of the spring in the axial direction, d2 is a thickness of an outermost coil at one end of the spring, and d3 is a thickness of the outermost coil at another end of the spring. As shown in FIG. 18 and 19, the spring is a spiral cylindrical coil, and the spring wire diameter d1 is a diameter of the main body of each coil of the spring. As the number of spiral turns increases, the length occupied by the spring body is a sum of solid coils of the spring, namely, d1 × n1. As shown in FIG. 18, the number of coils of the spring is 4, and the solid length of this part after being completely compressed is d1 × 4. The end of the spring may be ground flat to facilitate installation. The so-called grinding flat treatment refers to grinding away a part of the originally cylindrical spring body to make its top surface flatter. After the grinding treatment, the spring body becomes thinner, that is, it is no longer a complete cylinder. Then the thickness d2 and d3 of the spring body in this region is less than the spring wire diameter d1. However, in some embodiments, the end of the spring may also not be treated. In this case, the thickness of the spring body is equal to the spring wire diameter d1, that is, d2 ≤ d1 and d3 ≤ d1. Therefore, an overall length of the spring body is L2 = d1 × n1 + d2 + d3. By configuring L1 > L2, the spring is prevented from being fully compressed after installation, thereby leaving sufficient space for compression and movement.

According to some embodiments of the present application, the compression margin of the elastic member 322 in a compressed state between the valve cover 312 and the blocking member 321 is greater than or equal to 0.5 mm, that is, L1 - L2 > 0.5 mm. The elastic member 322 has enough compression margin for the blocking member 321 to move along the axial direction Y of the valve cavity, so that the blocking member 321 can open the gas inlet 313a. If the elastic member 322 is a spring, in the axial direction Y of the valve cavity, a sum of the gaps between the coils of the spring is greater than or equal to 0.5 mm. Illustratively, L1 - L2 may be 0.1 mm, 0.2 mm, 0.3 mm, 0.4 mm, 0.5 mm, or the like.

According to some embodiments of the present application, the blocking member 321 includes a pressing portion 3212 and a sealing portion 3211. Along an axial direction of the valve cavity 313, two ends of the elastic member 322 respectively abut against the valve cover 312 and the pressing portion 3212. The sealing portion 3211 is connected to a side of the pressing portion 3212 away from the valve cover 312. The sealing portion 3211 is configured to block the gas inlet 313a.

The sealing portion 3211 is connected to a side of the pressing portion 3212 away from the cover top wall 3121. The sealing portion 3211 is configured to block the gas inlet 313a. The elastic member 322 is disposed between the cover top wall 3121 and the pressing portion 3212. The pressing portion 3212 can be pressed against the sealing portion 3211 under the elastic force of the elastic member 322, so that an upper surface of the sealing portion 3211 is in effective contact with the pressing portion 3212, and the sealing portion 3211 abuts against the cavity bottom surface of the valve cavity 313, thereby blocking the gas inlet 313a through the sealing portion 3211. A second guide post 3212b protruding from a side of the pressing portion 3212 facing the cover top wall 3121 may be provided, and a part of the elastic member 322 is sleeved on the outer side of the second guide post 3212b.

In other embodiments, the blocking member 321 may alternatively be integrally formed as a single sealed component, such as a rubber pad or a silicone pad, that is, the blocking member 321 includes only a sealing portion 3211, and two ends of the elastic member 322 respectively abut against the valve cover 312 and the sealing portion 3211. However, in other embodiments, the valve core 32 may alternatively be integrally formed as a single elastic component, such as elastic rubber.

According to some embodiments of the present application, the stiffness of the pressing portion 3212 is greater than that of the sealing portion 3211. The arrangement of the pressing portion 3212 enables the force exerted by the elastic member 322 to be effectively transmitted to the sealing portion 3211. In other words, the stiffness of the pressing portion 3212 is greater than the stiffness of the sealing portion 3211, that is, the deformation resistance of the pressing portion 3212 is greater than that of the sealing portion 3211, so that the pressing portion 3212 can more effectively press the sealing portion 3211 against the cavity bottom surface of the mounting cavity to block the gas inlet 313a. Illustratively, the pressing portion 3212 may be made of various materials, such as steel, iron, or aluminum. Similarly, the sealing portion 3211 may also be made of various materials, such as rubber, silicone, or plastic.

Optionally, the connection structure between the pressing portion 3212 and the sealing portion 3211 may be various types, such as snap-fit connection, bolted/screwed connection, or adhesive bonding.

By configuring the blocking member 321 to include two parts, the pressing portion 3212 and the sealing portion 3211, where the pressing portion 3212 is disposed on a side of the sealing portion 3211 facing the valve cover 312, the sealing portion 3211 is configured to block the gas inlet 313a, and two ends of the elastic member 322 respectively abut against the valve cover 312 and the pressing portion 3212, the elastic member 322 can apply its elastic force to the sealing portion 3211 through the pressing portion 3212, which is beneficial to improving uniformity of the elastic force applied by the elastic member 322 onto the sealing portion 3211, thus effectively improving the blocking effect of the sealing portion 3211 on the gas inlet 313a.

According to some embodiments of the present application, the sealing portion 3211 is made of a material that is resistant to electrolyte, such as fluororubber, PFA, or ethylene propylene diene monomer. Different sealing materials have different physical properties, and correspondingly require different forces to achieve sealing.

Referring to FIG. 20, FIG. 20 is a schematic structural diagram of the blocking member 321 of a one-way valve according to one or more embodiments. According to some embodiments of the present application, a plurality of limiting protrusions 3212a protrude from an outer peripheral surface of the blocking member 321, and the plurality of limiting protrusions 3212a are circumferentially spaced apart along the blocking member 321.

The limiting protrusions 3212a are in guiding fit with the cavity side surface of the valve cavity 313, that is, the limiting protrusions 3212a are configured to cooperate with the cavity wall surface of the valve cavity 313 when the blocking member 321 moves along the axial direction of the valve cavity 313, so as to provide guiding and limiting functions. The limiting protrusions 3212a and the cavity side surface of the valve cavity 313 may be in clearance fit. In other embodiments, the one-way valve 30 may alternatively have other structures. For example, the cavity side surface of the valve cavity 313 is provided with a guide groove (not shown in the figure) extending along the axial direction of the valve cavity 313. The limiting protrusions 3212a extend into the guide groove. The limiting protrusions 3212a can move within the guide groove along the axial direction of the valve cavity 313 when the blocking member 321 opens the gas inlet 313a, so as to provide guiding and limiting functions. A plurality of guide grooves may be provided, and the plurality of guide grooves respectively cooperate with the plurality of limiting protrusions 3212a. Optionally, the shape of the limiting protrusions 3212a may be various, such as a semicircular, triangular, trapezoidal or rectangular structure. Illustratively, in FIG. 3a, the limiting protrusion 3212a is semicircular in shape.

By providing a plurality of limiting protrusions 3212a arranged at intervals on the outer peripheral surface of the blocking member 321, and configuring the limiting protrusions 3212a to be in guiding fit with the cavity side surface of the valve cavity 313, when the blocking member 321 moves along the axial direction of the valve cavity 313, the cooperation between the limiting protrusions 3212a and the cavity side surface of the valve cavity 313 can guide and limit the blocking member 321, thereby improving movement stability of the blocking member 321. Illustratively, the limiting protrusions 3212a protrude from an outer peripheral surface of the pressing portion 3212.

Referring to FIG. 21, FIG. 21 is a schematic cross-sectional structural diagram of a wall portion according to one or more embodiments. According to some embodiments of the present application, the one-way valve 30 is disposed on the wall portion, which may mean that the one-way valve 30 is disposed on the end cover 21. The end cover 21 is provided with a first vent hole 291. The first vent hole 291 includes a through hole section 280 and a first hole section 281. The through hole section 280 and the first hole section 281 are arranged along the thickness direction of the end cover 21. The through hole section 280 communicates the inside of the housing with the outside of the housing. The first hole section 281 is located on a side of the through hole section 280 away from the inside of the housing. A diameter of the first hole section 281 is larger than a diameter of the through hole section 280. The one-way valve 30 is at least partially accommodated in the first hole section 281.

The first vent hole 291 is a counterbore recessed relative to the outer surface 21a of the end cover 21. When the one-way valve 30 is connected to the end cover 21, a part of the structure of the one-way valve 30 may be embedded into the first vent hole 291 to reduce the mounting height.

Referring to FIG. 8 and FIG. 16 together, the one-way valve 30 being disposed on the outer surface 21a of the end cover 21 may mean that the valve body 31 of the one-way valve 30 faces the outside of the housing and at least part of the valve body 31 protrudes from the outer surface 21a of the end cover 21, or may mean that the valve body 31 of the one-way valve 30 faces the inside of the housing and at least part of the valve body 31 protrudes from the inner surface 21b of the end cover 21.

Referring to FIG. 8, according to some embodiments of the present application, a side of the valve seat 311 facing the valve cover 312 is provided with a first step surface 311b and a second step surface 311c. The first step surface 311b is closer to the valve cover 312 than the second step surface 311c. The first recess 3112 is provided on the first step surface 311b.

The first hole section 281 includes a circumferentially arranged hole side surface, and an outer peripheral surface of the valve cover 312/valve seat 311 of the one-way valve 30 is welded to the hole side surface. The outer peripheral surface of the second step surface 311c is welded to the hole side surface.

According to some embodiments of the present application, the hole side surface matches the outer peripheral surface of the valve cover 312/valve seat 311 of the one-way valve 30, and both the hole side surface and the outer peripheral surface of the valve cover 312/valve seat 311 of the one-way valve 30 are arranged at an acute angle relative to a central axis of the first vent hole 291. Through such arrangement, the connection strength can be enhanced.

According to some embodiments of the present application, the one-way valve 30 is welded to the end cover 21. As shown in FIG. 8, the valve seat 311 of the one-way valve 30 may be welded to the end cover 21. Specifically, the valve cover 312 of the one-way valve 30 is connected to the valve seat 311, and the valve seat 311 is welded to the end cover 21. In other implementations, when the one-way valve 30 adopts the embodiment shown in FIG. 12, the valve seat 311 of the one-way valve 30 may be connected to the valve cover 312, and the valve cover 312 may be welded to the end cover 21.

According to some embodiments of the present application, a stress relief groove is provided around the third welding mark between the valve cover 312/valve seat 311 and the end cover 21. The stress relief groove may be provided only on the end cover 21, or only on the valve cover 312/valve seat 311, or on both the end cover 21 and the valve cover 312/valve seat 311. Optionally, a first stress relief groove is provided on a side surface of the valve seat 311/valve cover 312 facing the outside of the housing; and/or a second stress relief groove is provided on a side surface of the wall portion facing the outside of the housing. As shown in FIG. 16, a first stress relief groove 311a is provided on the valve seat 311 around the third welding mark W3 between the valve seat 311 and the end cover 21.

According to some embodiments of the present application, the venting assembly includes a breathable membrane assembly 40. The breathable membrane assembly 40 includes a breathable membrane 41. The breathable membrane 41 is configured to allow gas inside the battery cell to pass through the breathable membrane and be vented.

According to some embodiments of the present application, the breathable membrane assembly 40 includes a breathable membrane 41. The breathable membrane 41 is made of a breathable material and has good breathable performance, enabling gas molecules to pass through. By adopting the breathable membrane assembly 40 as the venting assembly, gas inside the battery cell in a sealed state can be vented through the breathable membrane 41, so that gas inside the battery cell housing can be vented to the outside of the housing in a timely manner, and gas pressure inside the battery cell housing is prevented from becoming excessively high, thereby reducing a risk of premature opening of a pressure relief mechanism and significantly prolonging the service life of the battery cell.

Further, the breathable membrane 41 also has liquid-blocking properties, preventing liquid from passing through, and thus preventing electrolyte leakage while allowing gas to be vented. In addition, the breathable membrane 41 can block external moisture, dust, and impurities from entering the inside of the battery cell, thereby protecting the internal environment of the battery cell, and effectively improving the reliability of the battery cell. The breathable membrane 41 also has good weather resistance, chemical corrosion resistance, and structural stability. When used for automotive power batteries, the breathable membrane is further required to have oleophobic properties. Therefore, the material of the breathable membrane 41 may be selected from polymer materials, such as polytetrafluoroethylene or polypropylene. In addition, since gas generated inside the battery cell may cause the internal pressure to rise rapidly, the breathable membrane needs to have a certain mechanical strength and elasticity.

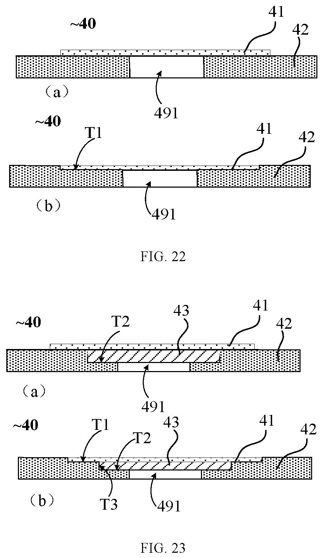

Referring to FIG. 22, FIG. 22 is a schematic cross-sectional structural diagram of a breathable membrane assembly according to one or more embodiments. According to some embodiments of the present application, the breathable membrane assembly 40 includes a breathable membrane 41 and a connecting member 42. The connecting member 42 is configured to support the breathable membrane 41. The connecting member 42 is provided with a first breathable hole 491. The breathable membrane 41 is disposed on the connecting member 42. The breathable membrane 41 covers the first breathable hole 491. The breathable membrane is configured to allow gas inside the battery cell to pass through the breathable membrane and be vented.

The connecting member 42 can provide support for the breathable membrane 41, thereby reducing the risk of excessive deformation of the breathable membrane 41. In addition, the connecting member 42 can also serve as a medium for connecting other components of the breathable membrane assembly 40. The breathable membrane 41 is connected to other components through the connecting member 42 to improve connection stability. The connecting member 42 is provided with at least one first breathable hole 491 as a release passage for gas inside the battery cell, so that the gas can pass through the connecting member 42. The first breathable hole 491 may have various geometric shapes, such as circle, square, and ellipse. The connecting member 42 may also be provided with a plurality of first breathable holes 491. The diameter, shape, and arrangement of the first breathable holes 491 are not specifically limited herein. Optionally, the diameter of the first breathable hole 491 may be less than or equal to that of the vent hole on the battery cell.

In an implementation, the connecting member 42 may be a metal member, a resin member, or the like. The metal member can be made of copper, iron, aluminum, steel, or aluminum alloy. By selecting the connecting member 42 as a metal member, welding connection between the connecting member 42 and the wall portion is facilitated. The following takes the connecting member 42 being a metal member 42 as an example to illustrate the solution of the present application, but the present application is not limited thereto, and the solution is still applicable to non-metal connecting members.

As shown in FIG. 22(a), the breathable membrane 41 may be directly disposed on the surface of the metal member 42. In other implementations, a recessed platform may also be provided on the metal member 42.

Referring to FIG. 22 (b), according to some embodiments of the present application, the metal member 42 has a first annular platform T1 recessed relative to the surface of the metal member 42. The first annular platform T1 is arranged around the first breathable hole 491, and the breathable membrane 41 is disposed on the first annular platform T1. Through such arrangement, the mounting height of the breathable membrane assembly 40 can be reduced.

Referring to FIG. 23, FIG. 23 is a schematic cross-sectional structural diagram of a breathable membrane assembly 40 according to one or more embodiments. According to some embodiments of the present application, the breathable membrane assembly 40 further includes a backing member 43. The backing member 43 is disposed between the breathable membrane 41 and the metal member 42. A gas permeability rate of the backing member 43 is greater than a gas permeability rate of the breathable membrane 41.

The breathable membrane assembly 40 includes a breathable membrane 41, a metal member 42, and a backing member 43. The breathable membrane 41 is disposed on the metal member 42. The backing member 43 is disposed between the breathable membrane 41 and the metal member 42. The backing member 43 is configured to support the breathable membrane 41 and allow gas to pass through via the breathable membrane 41.

The backing member 43 can provide support for the breathable membrane 41, thereby reducing the risk of deformation of the breathable membrane 41. The backing member 43 is made of a material having higher air permeability than the breathable membrane 41, so as not to affect the gas permeation process of the breathable membrane 41. The backing member 43 also has the characteristics of corrosion resistance and high-temperature resistance. The material of the backing member 43 may be selected from a wide variety of options, including porous polymers such as polypropylene-based materials, polyamide-based materials, polytetrafluoroethylene, and perfluoroethylene propylene. The backing member 43 may also be formed from metal-organic framework porous materials, as well as carbon membranes and ceramic porous materials, among others, without limitation herein.

As shown in FIG. 23(a), the metal member 42 also has a second annular platform T2 recessed relative to the surface of the metal member 42. The second annular platform T2 is arranged around the first breathable hole 491, and the backing member 43 is disposed on the second annular platform T2. The second annular platform T2 is configured to support the backing member 43, and the breathable membrane 41 may be directly attached to the surface of the metal member 42. In this way, because the thickness of the breathable membrane 41 is relatively small, the impact on the overall height of the breathable membrane assembly 40 is relatively limited. By reducing the number of recessed surfaces on the metal member 42, manufacturing processes can be simplified, and in addition, the strength of the metal member 42 can be improved.

As shown in FIG. 23(b), the metal member 42 has a first annular platform T1, a second annular platform T2, and a transition surface T3 that are recessed relative to the surface of the metal member 42. The first annular platform T1 is arranged around the second annular platform T2. The transition surface T3 connects the first annular platform T1 and the second annular platform T2. The first annular platform T1 is closer to the surface of the metal member 42 than the second annular platform T2. The second annular platform T2 is arranged around the first breathable hole 491. The backing member 43 is disposed on the second annular platform T2, and the breathable membrane 41 is disposed on the first annular platform T1.

The first annular platform T1 and the second annular platform T2 are formed by recessing inward from the surface of the metal member 42. The metal member 42 may be stamped to form the recessed first annular platform T1 and second annular platform T2, or the metal member 42 may be etched to remove a part of the structure to form the recessed first annular platform T1 and second annular platform T2. The recessed depth of the first annular platform T1 and the second annular platform T2 relative to the surface of the metal member 42 may be set according to the thickness of the breathable membrane 41 and the backing member 43. Preferably, the recessed depth of the second annular platform T2 relative to the first annular platform T1 (that is, the height of the transition surface T3) is equal to the thickness of the backing member 43, so that the second annular table can accommodate the backing member 43, and the surface of the backing member 43 facing the breathable membrane 41 is flush with the first annular platform T1. Further, the recessed depth of the first annular platform T1 relative to the surface of the metal member 42 is equal to the thickness of the breathable membrane 41, so that the first annular table can accommodate the breathable membrane 41, and the surface of the breathable membrane 41 away from the metal member 42 is flush with the surface of the metal member 42.

By providing recessed platforms on the metal member 42, the surface of the breathable membrane 41 can be made flush with the surface of the metal member 42, thereby reducing the overall height of the breathable membrane assembly 40 and further reducing the mounting height of the breathable membrane assembly 40.

In an implementation, the breathable membrane 41 is compositely connected to the metal member 42. For example, the breathable membrane 41 and the metal member 42 may be connected using a nano injection molding process. Nano injection molding refers to nano molding technology (NMT, namely Nano Molding Technology), which is a process for combining metal and plastic using nanotechnology. Specifically, the metal surface is first subjected to nano-scale treatment, and then plastic is directly injection molded on the metal surface, so that the metal and plastic can be integrally molded and finally combined into a single product. The "nano" referred to herein denotes a microporous process in which the metal surface is subjected to nano-scale microporous treatment using a specific solution, primarily to improve bonding between the metal surface and the plastic and enhance connection strength.

According to some embodiments of the present application, the breathable membrane assembly 40 is disposed on a wall portion. The wall portion has a first recessed platform S1 recessed relative to the surface of the wall portion. The first recessed platform S1 is arranged around the second vent hole 292. The breathable membrane assembly 40 is at least partially located on the first recessed platform S1. The breathable membrane assembly 40 may be disposed on the end cover 21.

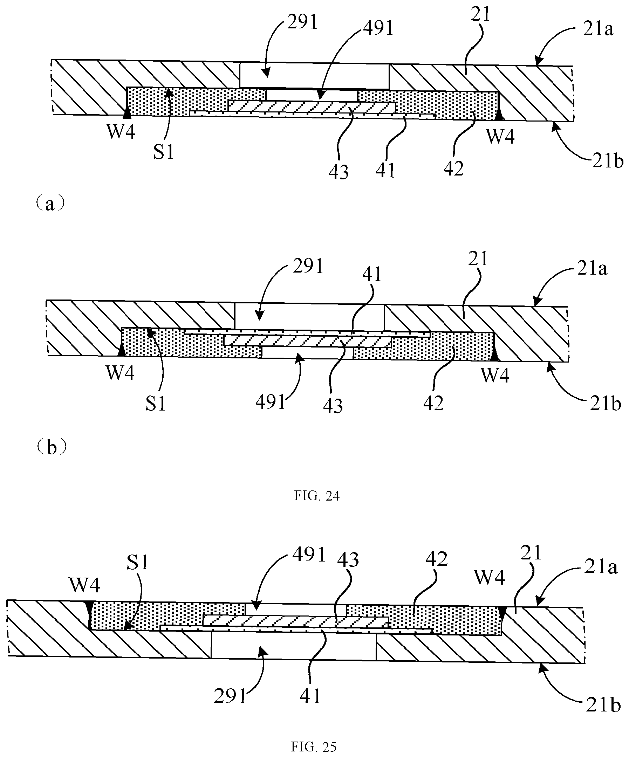

Referring to FIG. 24 and FIG. 25, FIG. 24 is a schematic partial cross-sectional structural diagram of a battery cell 20 according to one or more embodiments, and FIG. 25 is a schematic partial cross-sectional structural diagram of a battery cell 20 according to one or more embodiments. According to some embodiments of the present application, the end cover 21 has a first recessed platform S1 recessed relative to the surface of the end cover 21. The first recessed platform S1 is arranged around the second vent hole 292. At least part of the breathable membrane assembly 40 is disposed on the first recessed platform S1.

The end cover 21 includes an outer surface 21a and an inner surface 21b arranged opposite to each other. The outer surface 21a faces the outside of the housing, and the inner surface 21b faces the inside of the housing. The breathable membrane assembly 40 may be disposed on a side of the end cover 21 facing the inside of the housing, or on a side of the end cover 21 facing the outside of the housing.

As shown in FIG. 24(a) and FIG. 24(b), the breathable membrane assembly 40 is disposed on a side of the end cover 21 facing the inside of the housing. The end cover 21 has an outer surface 21a and an inner surface 21b arranged opposite to each other. The outer surface 21a faces the outside of the housing, and the inner surface 21b faces the inside of the housing. The end cover 21 has a first recessed platform S1 recessed relative to the inner surface 21b of the end cover 21.

Specifically, the first recessed platform S1 is recessed relative to the inner surface 21b of the end cover 21, and the breathable membrane assembly 40 is disposed on the first recessed platform S1. Optionally, the breathable membrane assembly 40 can be connected to the end cover 21 through the metal member 42.

The first recessed platform S1 is formed by recessing from the inner surface 21b of the end cover 21 toward the outer surface 21a of the end cover 21. The end cover 21 may be stamped to form the recessed first recessed platform S1, or the end cover 21 may be etched to remove a part of the structure to form the recessed first recessed platform S1. The recessed depth of the first recessed platform S1 relative to the inner surface 21b of the end cover 21 may be set according to the thickness of the breathable membrane assembly 40. The thickness of the breathable membrane assembly 40 is an overall thickness including thicknesses of the breathable membrane 41, the metal member 42 and the backing member 43. As mentioned above, the breathable membrane 41 and the backing member 43 may be accommodated within the annular platform recessed relative to the surface of the metal member 42 on the metal member 42, that is, the overall thickness of the breathable membrane assembly 40 may be equal to the thickness of the metal member 42. Preferably, the recessed depth of the first recessed platform S1 relative to the inner surface 21b of the end cover 21 is equal to the thickness of the breathable membrane assembly 40, so that the breathable membrane assembly 40 is accommodated within the first recessed platform S1, and a surface of the breathable membrane assembly 40 facing the inside of the housing is flush with the inner surface 21b of the end cover 21. In this way, the mounting height of the breathable membrane assembly 40 can be reduced, thereby reducing the occupation of space inside the housing of the battery cell 20 and improving space utilization inside the housing.

As shown in FIG. 24(a), the breathable membrane 41 may be disposed on a side of the metal member 42 facing the inside of the housing. Through such arrangement, the influence of the operating external environment of the battery cell 20 on the breathable membrane 41 can be reduced. As shown in FIG. 24(b), the breathable membrane 41 may alternatively be disposed on a side of the metal member 42 facing the end cover 21, that is, the breathable membrane 41 is disposed between the metal member 42 and the end cover 21. Through such arrangement, installation of the breathable membrane assembly 40 can be facilitated.

As shown in FIG. 25, the breathable membrane assembly 40 is disposed on a side of the end cover 21 facing the outside of the housing. Specifically, the first recessed platform S1 is recessed relative to the outer surface 21a of the end cover 21. The breathable membrane assembly 40 is disposed on the first recessed platform S1 and is connected to the end cover 21 through the metal member 42. In this implementation, the first recessed platform S1 is formed by recessing from the outer surface 21a of the end cover 21 toward the inner surface 21b of the end cover 21. Similarly, the recessed depth of the first recessed platform S1 relative to the outer surface 21a of the end cover 21 may be equal to the thickness of the breathable membrane assembly 40.

As shown in FIG. 25, the breathable membrane 41 is disposed on the side of the metal member 42 facing the inside of the housing, that is, the breathable membrane 41 is disposed between the end cover 21 and the metal member 42. Through such arrangement, the influence of the operating external environment of the battery cell 20 on the breathable membrane 41 can be reduced. In other implementations, the breathable membrane 41 may alternatively be disposed on a side of the metal member 42 facing the outside of the housing.

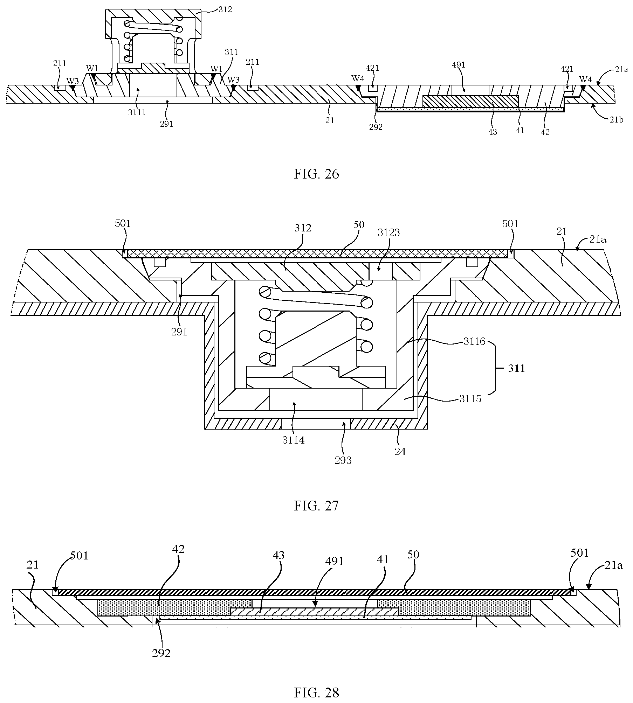

According to some embodiments of the present application, the connecting member is welded to the wall portion. Optionally, a stress relief groove is provided around a fourth welding mark between the connecting member and the wall portion. Optionally, a third stress relief groove is provided on the connecting member around the fourth welding mark between the connecting member and the wall portion; and/or a fourth stress relief groove is provided on the wall portion around the fourth welding mark between the connecting member and the wall portion. As shown in FIG. 26, the connecting member is a metal member. The metal member 42 is welded to the end cover 21. A third stress relief groove 421 is provided on the metal member 42 surrounding the fourth welding mark W4 between the metal member 42 and the end cover 21.

Referring to FIG. 26, FIG. 26 is a schematic partial cross-sectional structural diagram of a battery cell according to one or more embodiments. According to some embodiments of the present application, the first vent hole 291 and the second vent hole 292 are located on the same wall portion. As shown in FIG. 26, the first vent hole 291 and the second vent hole 292 are arranged at intervals on the end cover 21. In this implementation, the valve body 31 of the one-way valve 30 is disposed on the outer surface 21a of the end cover 21, and at least part of the valve body 31 protrudes from the outer surface 21a of the end cover 21; and at least part of the breathable membrane assembly 40 is disposed on the outer surface 21a of the end cover 21.

In some embodiments, the end cover 21 is provided with a liquid injection hole, and the first vent hole 291 for installing the one-way valve 30 may be the liquid injection hole. That is, after liquid injection of the battery cell 20 is completed, the one-way valve 30 is installed on the liquid injection hole and is used to replace the sealing structure of the original liquid injection hole. By configuring the first vent hole 291 for installing the one-way valve 30 as a liquid injection hole, electrolyte can be injected into the housing through the first vent hole 291 before the one-way valve 30 is installed to the first vent hole 291, eliminating the need for a separate liquid injection hole in the housing, which is beneficial to improving the production efficiency of the battery cell 20 and reducing the manufacturing cost of the battery cell 20. Alternatively, the first vent hole 291 and the liquid injection hole may be spaced apart.

Referring to FIG. 2 and FIG. 3 together, the battery cell 20 further includes an insulating member 24. The insulating member 24 is disposed on the side of the wall portion facing the inside of the housing; a third vent hole 293 and a fourth vent hole 294 extending through the insulating member 24 are arranged at intervals on the insulating member 24. The third vent hole 293 communicates with the first vent hole 291 on the wall portion, and the fourth vent hole 294 communicates with the second vent hole 292 on the wall portion.

The insulating member 24 is made of a material that will not form a short circuit upon contact with the electrode assembly 23 inside the battery. The insulating member 24 is configured to protect the end cover 21 from being directly exposed to the electrode assembly 23 in the height direction to avoid a short circuit that could result from contact with the electrode assembly 23.

The insulating member 24 is provided with a third vent hole 293 and a fourth vent hole 294 extending through the insulating member 24, so that gas inside the battery enters the regions of the one-way valve 30 and the breathable membrane assembly 40 through the third vent hole 293 and the fourth vent hole 294. Further, the third vent hole 293 communicates with the first vent hole 291, and the fourth vent hole 294 communicates with the second vent hole 292, so that venting is smoother.

According to some embodiments of the present application, the insulating member 24 may be provided with an accommodating portion recessed relative to a surface of the insulating member 24 for accommodating an inward protrusion of the end cover 21, an inward protrusion of the one-way valve, or an inward protrusion of the breathable membrane assembly 40.

Referring to FIG. 27 and FIG. 28 together, FIG. 27 is a schematic partial cross-sectional structural diagram of a battery cell according to one or more embodiments; and FIG. 28 is a schematic partial cross-sectional structural diagram of a battery cell according to one or more embodiments. According to some embodiments of the present application, the battery cell 20 further includes a shielding member 50. The shielding member 50 is mounted on the end cover 21. The shielding member 50 is located on a side of the end cover 21 facing the outside of the housing and shields the one-way valve 30 or the breathable membrane assembly 40.

As shown in FIG. 27, when the valve body 31 of the one-way valve 30 is disposed on the outer surface 21a of the end cover 21 and at least part of the valve body 31 protrudes from the inner surface 21b, a shielding member 50 may be provided so that the shielding member 50 shields the one-way valve 30. As shown in FIG. 28, when at least part of the breathable membrane assembly 40 is disposed on the outer surface 21a of the end cover 21, a shielding member 50 may be provided so that the shielding member 50 shields the breathable membrane assembly 40.

The shielding member 50 can provide protection and shielding for the one-way valve 30 or the breathable membrane assembly 40. This can reduce wear or damage to the one-way valve 30 or the breathable membrane assembly 40 caused by the external environment and reduce the risk of impurities, or particles, or the like in the external environment entering the one-way valve 30 or the breathable membrane assembly 40, which is beneficial to prolonging the service life of the one-way valve 30 or the breathable membrane assembly 40. In addition, covering the one-way valve 30 or the breathable membrane assembly 40 with the shielding member 50 can improve the aesthetics of appearance of the outer surface 21a of the battery cell 20. Furthermore, other components such as a sensing element can be conveniently connected on the side of the shielding member 50 facing away from the one-way valve 30 or the breathable membrane assembly 40, thereby reducing interference of the region of the end cover 21 provided with the one-way valve 30 or the breathable membrane assembly 40 with the installation of sensing elements or other components.

According to some embodiments of the present application, the shielding member 50 can be mounted on the end cover 21 by means of welding, interference fit, bolt connection, snap connection, or bonding.

According to some embodiments of the present application, a first discharge passage is formed between the shielding member 50 and the end cover 21. The first discharge passage communicates the gas outlet of the one-way valve 30 or the breathable membrane assembly 40 with the outside of the battery cell.

The first discharge passage includes a third vent gap 501. The third vent gap is formed between the shielding member 50 and the end cover 21. The third vent gap is used to communicate the gas outlet and the outside of the housing. By providing the third vent gap, gas vented by the one-way valve 30 or the breathable membrane assembly 40 can be vented to the outside of the housing through the third vent gap. The battery cell with such a structure does not need to provide holes or passages on the shielding member, which is beneficial to reducing processing difficulty and improving the aesthetics of appearance of the battery cell.

According to some embodiments of the present application, referring to FIG. 1 to FIG. 3, the battery cell 20 further includes a pressure relief mechanism 70. The pressure relief mechanism 70 is disposed on the housing and is configured to actuate and relieve the internal pressure of the battery cell 20 when the battery cell 20 undergoes thermal runaway.

The pressure relief mechanism 70 is disposed on the housing and may be disposed on the end cover 21 or on the casing 22. Illustratively, the pressure relief mechanism 70 is disposed on the end cover 21.

The pressure relief mechanism 70 is configured to actuate and relieve the internal pressure of the battery cell 20 when the battery cell 20 undergoes thermal runaway, that is, when thermal runaway occurs inside the battery cell 20, the pressure relief mechanism 70 can be actuated and opened to release gas generated by thermal runaway inside the battery cell 20. It should be noted that when thermal runaway occurs in the battery cell 20, a large amount of gas is rapidly generated inside the housing of the battery cell 20, thereby opening the pressure relief mechanism 70 for pressure release, while gas generated inside the housing of the battery cell 20 during normal operation can be vented through the one-way valve 30 and/or the breathable membrane assembly 40, but is not sufficient to open the pressure relief mechanism 70.

Optionally, the pressure relief mechanism 70 and the housing may be an integrally formed structure, or may be configured as separate structures. When the pressure relief mechanism 70 and the housing are an integrally formed structure, the pressure relief mechanism 70 may be a region of the housing with a weak structure, such as a region of the housing with a scored groove. When the pressure relief mechanism 70 and the housing are configured as separate structures, the pressure relief mechanism 70 may be connected to the housing by welding, thermal fusion, injection molding, adhesive bonding, or the like. Illustratively, in FIG. 2 and FIG. 3, the pressure relief mechanism 70 and the housing are separate structures, and the pressure relief mechanism 70 is disposed on the end cover 21 of the housing. The pressure relief mechanism 70 may be a pressure relief component such as an explosion-proof valve, a rupture disc, a pressure relief valve, or a safety valve.

Illustratively, both the electrode terminal 25 and the pressure relief mechanism 70 are disposed on the end cover 21. The battery cell 20 with such a structure can reduce space occupied by the battery cell 20. However, in other embodiments, the electrode terminal 25 and the pressure relief mechanism 70 may alternatively be disposed on different walls of the housing. The battery cell 20 with such a structure can keep the electrode terminal 25 for outputting or inputting electric energy of the battery cell 20 away from the pressure relief mechanism 70 for relieving internal pressure, so as to reduce operational risk of the battery cell 20. For example, the pressure relief mechanism 70 is disposed on the casing 22, and the electrode terminal 25 is disposed on the end cover 21.

By providing the one-way valve 30 and the breathable membrane assembly 40, when gas is generated inside the housing during the normal use of the battery cell 20, the gas can be vented to the outside of the housing through the one-way valve 30 and/or the breathable membrane assembly 40. This alleviates the phenomenon that the pressure relief mechanism 70 prematurely actuates pressure relief due to an increase in internal air pressure of the battery cell 20 before thermal runaway of the battery cell 20 occurs, thereby effectively improving operational stability of the battery cell 20, so as to improve the service life and operational reliability of the battery cell 20.

In some embodiments, the one-way valve 30, the breathable membrane assembly 40, and the pressure relief mechanism 70 may be disposed on the same wall of the housing. For example, the one-way valve 30, the breathable membrane assembly 40, and the pressure relief mechanism 70 are all disposed on the end cover 21. The battery cell 20 with such a structure is beneficial to reducing space occupied by the battery cell 20 to improve the energy density of the battery cell 20.

In some embodiments, the one-way valve 30, the breathable membrane assembly 40 and the pressure relief mechanism 70 can be disposed on different walls of the housing. For example, the one-way valve 30 and the breathable membrane assembly 40 are disposed on the casing 22, and the pressure relief mechanism 70 is disposed on the end cover 21. The battery cell 20 with such a structure can reduce the mutual influence between the one-way valve 30 and the breathable membrane assembly 40 and the pressure relief mechanism 70, and can be suitable for different operating environments. It is preferred that the one-way valve 30, the breathable membrane assembly 40, and the pressure relief mechanism 70 are disposed on the wall at the top when the battery is in its placed orientation, so as to facilitate gas venting.

In some embodiments, the actuation pressure of the pressure relief mechanism 70 is greater than the opening pressure of the one-way valve 30, that is, the pressure required for gas inside the housing to open the pressure relief mechanism 70 is greater than the pressure required for gas inside the housing to open the one-way valve 30. When thermal runaway occurs in the battery cell 20, a large amount of gas is rapidly generated inside the housing of the battery cell 20, thereby opening the pressure relief mechanism 70 for pressure release, while the one-way valve 30 can be opened when gas generated inside the housing 21 of the battery cell 20 during normal operation reaches the threshold, but cannot open the pressure relief mechanism 70.

In some embodiments, the gas venting rate of the one-way valve 30 is less than the gas venting rate of the pressure relief mechanism 70.

By configuring the gas venting rate of the one-way valve 30 to be less than the gas venting rate of the pressure relief mechanism 70, when thermal runaway occurs in the battery cell 20, the phenomenon that the pressure relief mechanism 70 cannot be actuated and opened due to excessively fast venting through the one-way valve 30 can be alleviated, so that the pressure relief mechanism 70 can be actuated and stably relieve the internal pressure of the battery cell 20 when the battery cell 20 undergoes thermal runaway, making pressure relief easier, which is beneficial to reducing the risk of fire and explosion of the battery cell 20 during thermal runaway.

A pressure relief hole 701 is provided on the end cover 21, and the pressure relief hole 701 communicates with the pressure relief mechanism 70. A diameter of the pressure relief hole 701 may be greater than a diameter of the first vent hole 291 communicating with the one-way valve 30 and the breathable membrane assembly 40, so that the gas venting rate of the pressure relief mechanism 70 is greater than the gas venting rate of the one-way valve 30.

In some embodiments, the gas permeability rate of the breathable membrane 41 is 3-10 mL/day, for example, 3-4 mL/day, 5-8 mL/day, or 9-10 mL/day. By configuring the gas venting rate of the breathable membrane 41 to be 3-10 mL/day, when thermal runaway occurs in the battery cell 20, the phenomenon that the pressure relief mechanism 70 cannot be actuated and opened due to excessively fast venting can be alleviated, so that the pressure relief mechanism 70 can be actuated and stably relieve the internal pressure of the battery cell 20 when the battery cell 20 undergoes thermal runaway, which is beneficial to reducing the risk of fire and explosion of the battery cell 20 during thermal runaway. In addition, the air tightness of the system is also considered to prevent poor sealing performance caused by excessively rapid gas venting, so that the air tightness of the battery system is maintained while venting gas.

The test method for the gas venting rate of the breathable membrane 41 may be tested with reference to GB/T1038-2000.

According to some embodiments of the present application, the opening pressure of the one-way valve is greater than or equal to 0.2 MPa; optionally, greater than or equal to 0.4 MPa; and further optionally, greater than or equal to 0.8 MPa. Illustratively, the opening pressure of the valve core may be 0.20 MPa, 0.25 MPa, 0.30 MPa, 0.35 MPa, 0.40 MPa, 0.45 MPa, 0.50 MPa, 0.55 MPa, 0.60 MPa, 0.65 MPa, 0.70 MPa, 0.75 MPa, 0.80 MPa, 0.90 MPa, or 1.00 MPa.

The test method and principle for determining the opening pressure of the one-way valve may be based on helium leakage criteria. The helium leakage criteria are defined as follows: the system is deemed hermetic if the leakage rate is less than 10⁻⁶ Pa.m³/s; and gas leakage exists if the leakage rate is higher than 10⁻⁶ Pa.m³/s.

During testing, the one-way valve is used to seal the test chamber, and helium is introduced into the test chamber. A helium detector is used to monitor the amount of helium in the environment surrounding the test chamber. If helium is detected and the leakage rate is greater than 10⁻⁶ Pa.m³/s, it indicates that the test chamber is no longer sealed and that helium is leaking therefrom. The helium leakage rate is continuously monitored, and when the leakage rate is greater than 10⁻⁵ Pa.m³/s, it is determined that the one-way valve is opened to release gas, and the pressure of the test chamber at this moment is recorded as the opening pressure of the one-way valve.

According to some embodiments of the present application, when the breathable membrane assembly 40 and the one-way valve 30 are arranged in parallel, a breathable membrane 41 having a relatively low gas permeability rate may be combined with a one-way valve 30 having a relatively large valve opening pressure. In this way, because the breathable membrane 41 always remains in a gas-permeable state, an excessively high gas permeability rate may increase the risk of external moisture entering the inside of the battery cell 20 through the breathable membrane 41. Since the one-way valve 30 is also provided in the present solution, even if the gas permeability rate of the breathable membrane assembly 40 is relatively low, when the internal pressure of the battery cell 20 is too high, rapid pressure relief can still be achieved by opening the one-way valve 30. Therefore, a breathable membrane 41 with a relatively low gas permeability rate can be selected, which can reduce the risk of external moisture entering the inside of the battery cell 20 while still meeting the gas-permeable requirements. Due to the presence of the breathable membrane assembly 40 that always remains in a gas-permeable state, the internal pressure of the battery cell 20 will not become excessively high, and thus there is generally no need for the one-way valve 30 to open prematurely. In other words, when the internal pressure is relatively low, gas permeability can be achieved through the breathable membrane assembly, and therefore the opening pressure of the one-way valve 30 may be set to a relatively high value.

In some embodiments, the battery cell 20 is an alkali metal battery, such as a sodium metal battery, a lithium metal battery, or a magnesium metal battery. When used in combination with venting assembly, the alkali metal battery can vent gas generated during normal operation in a timely manner, thereby prolonging the service life of alkali metal battery.

The electrode assembly 23 is mainly formed by winding or stacking a positive electrode sheet and a negative electrode sheet, and a separator is typically provided between the positive electrode sheet and the negative electrode sheet. The parts of the positive electrode sheet and the negative electrode sheet with active substances constitute the main body of the electrode assembly, and the parts of the positive electrode sheet and the negative electrode sheet without active substances respectively constitute electrode tabs. A positive electrode tab and a negative electrode tab may be located together at one end of the main body or at two ends of the main body respectively. During charging and discharging of the battery, a positive active substance and the negative active substance react with the electrolyte, and the electrode tabs are connected to the electrode terminals to form a current loop.

In an implementation, the positive electrode sheet includes a positive current collector and a positive active layer disposed on at least one side of the positive current collector, and the positive active layer includes a positive active material.

In an example, the positive current collector has two surfaces opposite in its own thickness direction, and the positive active layer may be disposed on any one or both of the two opposite surfaces of the positive current collector.

In an implementation, the positive current collector may be a metal foil or a composite current collector. For example, as a metal foil, an aluminum foil may be used. The composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver and silver alloy, or the like) on a polymer material substrate (such as polypropylene (PP), polyethylene terephthalate (PET), polybutylene terephthalate (PBT), polystyrene (PS), and polyethylene (PE)).

In an implementation, the positive electrode material includes one or more of polyanion positive electrode materials, phosphate positive electrode materials, sulfate positive electrode materials, silicate positive electrode materials, and borate positive electrode materials. For example, in the positive active material of a sodium battery, the polyanion compound includes a phosphate-based compound and a fluorophosphate-based compound. The phosphate-based compound includes Naₓ₁Fe_{y1}Pₘ₁Oₙ₁, such as sodium iron phosphate with a relatively high capacity and sodium iron pyrophosphate with a relatively high voltage platform. The polyanion compound includes one or more of sodium vanadium trifluorophosphate Na₃V₂(PO₄)₂F₃, sodium vanadium fluorophosphate NaVPO₄F, sodium vanadium phosphate Na₃V₂(PO₄)₃, Na₄Fe₃(PO₄)₂P₂O₇, NaFePO₄, and Na₃V₂(PO₄)₃. The Prussian blue compound is NaₓMM(CN)₆, where M and M are one or more of Fe, Mn, Co, Ni, Cu, Zn, Cr, Ti, V, Zr, and Ce, where 0 < x ≤ 2. The positive active material in a lithium metal battery may include at least one of nickel cobalt manganese lithium, nickel cobalt aluminum lithium, lithium iron phosphate, lithium cobalt oxide, lithium manganese oxide, or lithium manganese iron phosphate.

In an implementation, the negative electrode sheet includes a negative current collector and a negative active layer disposed on at least one surface of the negative current collector, and the negative active layer includes a negative active material. In this implementation, the battery cell is an ion battery. During charging and discharging of the battery, active ions (such as Li⁺, Na⁺) are intercalated into and deintercalated from the negative active material.

In an example, the negative current collector has two surfaces opposite in its own thickness direction, and the negative active layer may be disposed on any one or both of the two opposite surfaces of the negative current collector.

In an implementation, the negative current collector can be a metal foil or a composite current collector. For example, as a metal foil, a copper foil may be used. The composite current collector may include a polymer material base layer and a metal layer formed on at least one surface of the polymer material substrate. The composite current collector may be obtained by forming a metal material (copper, copper alloy, nickel, nickel alloy, titanium, titanium alloy, silver and silver alloy, or the like) on a polymer material substrate (such as polypropylene (PP), polyethylene terephthalate (PET), polybutylene terephthalate (PBT), polystyrene (PS), and polyethylene (PE)).

In an implementation, the negative active material may include one or more of silicon-based materials, silicon-carbon materials, carbon materials, and selenium-based materials. Specifically, the negative electrode active material includes one or more of artificial graphite, natural graphite, hard carbon, soft carbon, silicon-based materials, and selenium-based materials. The silicon-based material may be selected from one or more of elemental silicon, silicon oxides (such as silicon monoxide), silicon-carbon composites, silicon-nitrogen composites, and silicon alloys. The selenium-based materials may be selected from one or more of elemental selenium, selenium oxides, and selenium alloys.

In an implementation, the negative electrode sheet includes a negative current collector and a carbon-containing coating disposed on at least one surface of the negative current collector. In this implementation, the battery cell is a metal battery. During charging and discharging of the battery, active ions are deposited onto and stripped from the negative electrode sheet. The metal battery may be an alkali metal battery, such as one of a lithium metal battery, a sodium metal battery, a potassium metal battery, a zinc metal battery, and an aluminum metal battery. This type of battery may also be called a "negative electrode-free battery". During charging, active ions (such as Na⁺) extracted from the positive active material are deposited on the negative current collector to form sodium metal. The arrangement of the carbon-containing coating is beneficial to making the metal deposition more uniform. The carbon-containing material includes one or more of conductive carbon, graphite, hard carbon, and carbon nanotubes.

In other implementations, a conductive film layer may also be deposited on the negative current collector, such as alloy materials, titanium-based materials, active metals (such as sodium metal), carbon-based materials deposited with metal, composite materials containing metal, and alloy materials containing metal. The above alloy materials include but are not limited to sodium-tin alloys, sodium-germanium alloys, and sodium-antimony alloys. The above titanium-based materials include, but are not limited to, titanium dioxide, titanates, and titanium phosphates.

In one embodiment, the positive active layer and the negative active layer may further include a binder and a conductive agent. In an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin. In an example, the conductive agent may include at least one of superconducting carbon, acetylene black, carbon black, Ketjen black, carbon dots, carbon nanotubes, graphene, and carbon nanofibers.

In one embodiment, the separator may be any known porous separator with good chemical stability and mechanical stability.

In one embodiment, a material of the separator may be at least one selected from glass fiber, non-woven fabric, polyethylene, polypropylene, and polyvinylidene fluoride. The separation film may be a single-layer film or a multi-layer composite film, which is not particularly limited. When the separation film is a multi-layer composite film, all layers may be made of the same or different materials, which is not particularly limited.

An electrolyte conducts ions between a positive electrode sheet and a negative electrode sheet. The electrolyte may be in a liquid state, a gel state, or a solid state.

In some implementations, the electrolyte is an electrolyte solution. The electrolyte includes an electrolyte salt and a solvent. Upon dissolution, the electrolyte salt dissociates into electrolyte ions, and electrical conduction is achieved through the movement of the electrolyte ions.

In one embodiment, in a sodium battery, the electrolyte salt includes sodium salts such as sodium hexafluorophosphate (NaPF₆), sodium bis(fluorosulfonyl)imide (NaFSI), sodium trifluoromethanesulfonate (CF₃NaO₃S), and sodium sulfide (Na₂S). In a lithium battery, the electrolyte salt includes at least one lithium salt of lithium perchlorate, lithium hexafluoroarsenate, lithium hexafluorophosphate, lithium bis(trifluoromethanesulfonyl)imide, lithium bis(fluorosulfonyl)imide, lithium difluorooxalate borate, lithium tetrafluoroborate, and lithium trifluoromethanesulfonate.

In one embodiment, the solvent includes one or more solvents selected from chain ethers, glymes and derivatives thereof, diglyme, triglyme, tetraglyme, and cyclic ethers. Specific examples include dimethoxyethane (DME), diethylene glycol diethyl ether, tetraethylene glycol dimethyl ether, 2,2,2-trifluoroethyl ether, ethylene glycol diethyl ether, triethylene glycol dimethyl ether, ethylene glycol dimethyl ether derivatives, fluoroethyl methyl carbonate (FEMC), 1,3-dioxolane (DOL), acetonitrile (AN), fluorobenzene, triethyl phosphate (TEP), sulfolane, 2-methyltetrahydrofuran, tetrahydrofuran, dimethyl sulfoxide (DMSO), N,N-dimethylacetamide (DMAc), and the like.

In one embodiment, the electrolyte may further include additives. For example, the additives may include a negative electrode film-forming additive and a positive electrode film-forming additive. The additives may also include additives capable of improving certain battery performances, such as additives for improving overcharge performance, and additives for improving high-temperature or low-temperature performance.

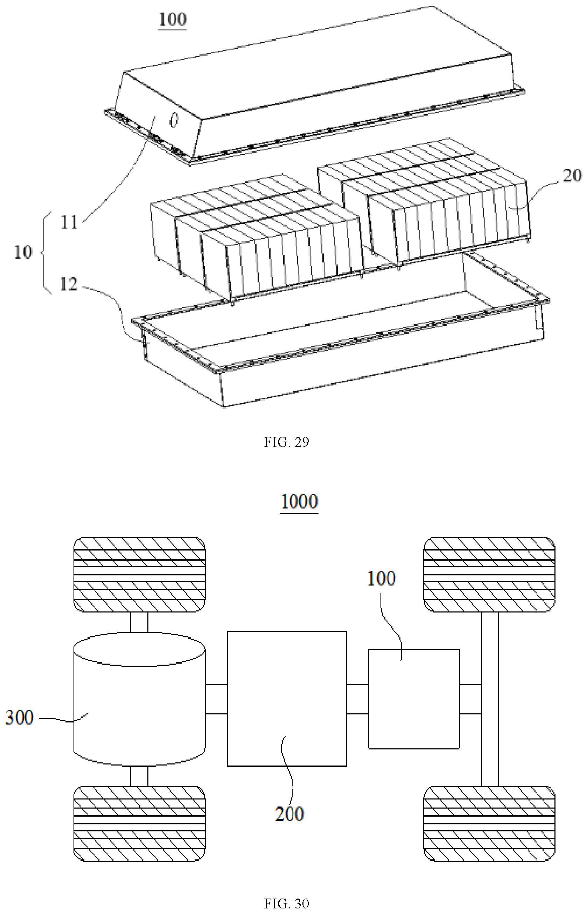

According to some embodiments of the present application, the present application also provides a battery 100. The battery 100 includes the battery cell 20 of any of the above solutions. Referring to FIG. 29, FIG. 29 is a schematic structural exploded view of a battery according to one or more embodiments. The battery 100 includes an enclosure 10 and a battery cell 20. The battery cell 20 is accommodated in the enclosure 10. The enclosure 10 is configured to provide an accommodating space for the battery cell 20. The enclosure 10 may be a variety of structures. In some embodiments, the enclosure 10 may include a first part 11 and a second part 12. The first part 11 and the second part 12 cover each other. The first part 11 and the second part 12 jointly define an accommodating space for accommodating the battery cell 20. The second part 12 may be a hollow structure with one end open, the first part 11 may be a plate-like structure, and the first part 11 covers the open side of the second part 12 so that the first part 11 and the second part 12 jointly define an accommodating space. Alternatively, the first part 11 and the second part 12 may both be hollow structures with one side open, where the open side of the first part 11 is engaged with the open side of the second part 12. However, the enclosure 10 formed by the first part 11 and the second part 12 may be of a variety of shapes, such as cylinder and cuboid.

In the battery 100, a plurality of battery cells 20 may be provided, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the enclosure 10. However, the battery 100 may be formed by a plurality of battery cells 20 connected in series, parallel, or series-parallel first to form a battery module, and then a plurality of battery modules are connected in series, parallel, or series-parallel to form an entirety which is accommodated in the enclosure 10. The battery 100 may further include other structures. For example, the battery 100 may further include a busbar configured to implement electrical connection between the plurality of battery cells 20.

Each battery cell 20 may be a secondary battery or a primary battery. Specific examples thereof include all types of primary batteries or secondary batteries. For example, the battery cell 20 may be a secondary battery of various types, such as a lithium battery, a sodium battery, or a potassium battery. The lithium secondary battery may include a lithium metal secondary battery, a lithium-ion secondary battery, a lithium polymer secondary battery, or a lithium-ion polymer secondary battery. The battery cell 20 may also be a lithium-sulfur battery, a sodium-ion battery, or a magnesium-ion battery, but is not limited thereto. The battery cell 20 may have a cylindrical shape, a flat shape, a cuboid shape, or any other suitable shape.

In some embodiments, the battery may be an energy storage device. The energy storage device may be an energy storage container, an energy storage cabinet, or the like.

According to some embodiments of the present application, the present application further provides an electric device. The electric device includes the battery cell of any of the above solutions, and the battery cell is configured to supply electric energy to the electric device. The electric device may be any of the above-mentioned devices or systems that utilize the battery cell.

In some implementations, the electric device of the present application is not particularly limited to any purpose, and may be used for any known electronic apparatus in the prior art. The battery disclosed in the embodiments of the present application may be used for electric apparatuses that use a battery as a power source or various energy storage systems that use a battery as an energy storage element. That is, an electric device is provided. In some embodiments, the electric device of the present application may be used in, but is not limited to, a notebook computer, a pen-input computer, a mobile computer, an electronic book reader, a portable telephone, a portable facsimile machine, a portable copier, a portable printer, a headset stereo, a video recorder, a liquid crystal television, a portable cleaner, a portable CD player, a mini-disc player, a transceiver, an electronic notebook, a calculator, a memory card, a portable recorder, a radio, a backup power supply, a motor, an automobile, a motorcycle, an electric-assisted bicycle, a bicycle, a ship, a spacecraft, a lighting apparatus, a toy, a game console, a clock, an electric tool, a flash lamp, a camera, a household large-scale energy storage battery, a lithium-ion capacitor, and the like.

A battery cell, a battery module, or a battery pack may be selected for the electric device according to its use requirements.

Referring to FIG. 30, FIG. 30 is a schematic structural diagram of a vehicle according to one or more embodiments. The vehicle 1000 may be a fuel vehicle, a gas vehicle, or a new energy vehicle. The new energy vehicle may be a battery electric vehicle, a hybrid vehicle, or an extended-range vehicle. A battery 100 is provided inside the vehicle 1000. The battery 100 can be arranged at the bottom, head or tail of the vehicle 1000. The battery 100 may be configured to supply power to the vehicle 1000. For example, the battery 100 may be used as an operational power supply for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of the present application, the battery 100 may serve not only as an operating power source for the vehicle 1000, but also as a driving power source for the vehicle 1000, replacing or partially replacing fuel oil or natural gas to provide driving power for the vehicle 1000.

In the above implementations, by providing a breathable membrane assembly, the battery cell can vent internal gas through the breathable membrane while remaining in a sealed state, thereby venting gas inside the battery housing to the outside of the housing in a timely manner. As a result, the gas pressure inside the battery housing is prevented from becoming excessively high, thereby reducing a risk of premature opening of a pressure relief mechanism and significantly prolonging the service life of the battery cell. One or more breathable membrane assemblies may be provided on one battery cell, and the position and manner of installation of each breathable membrane assembly may vary. For example, one breathable membrane assembly may be disposed on the side of the end cover facing the inside of the battery housing, and another one may be disposed on the side of the end cover facing the outside of the battery housing. One breathable membrane assembly may be disposed on the end cover, and another one may be disposed on the casing.

The above descriptions are merely implementations of the present application and are not intended to limit the patent scope of the present application. Any equivalent structural or procedural transformations made by using the content of the specification and drawings of the present application or any direct or indirect application in other related technical fields are included within the patent protection scope of the present application in the same way.

## Claims

1. A battery cell, **characterized by** comprising:
a housing having a wall portion, wherein the wall portion is provided with a first vent hole and a second vent hole arranged at intervals, and the first vent hole and the second vent hole each communicate the inside of the housing with the outside of the housing;
a breathable membrane assembly comprising a breathable membrane, wherein the breathable membrane assembly is disposed on the wall portion, and the breathable membrane assembly covers the second vent hole; and
a one-way valve comprising a valve body and a valve core, wherein a valve cavity is formed inside the valve body, the valve body is provided with a gas inlet and a gas outlet, the gas inlet is configured to communicate the valve cavity with the inside of the housing, and the gas outlet is configured to communicate the valve cavity with the outside of the housing; the valve core is disposed in the valve cavity, the valve core is configured to block the gas inlet, and the valve core is configured to open the gas inlet under an action of gas inside the housing and release the gas inside the battery cell; and the one-way valve is disposed on the wall portion and covers the first vent hole.

2. The battery cell according to claim 1, **characterized in that**
the wall portion has an outer surface and an inner surface arranged opposite to each other, the outer surface faces the outside of the housing, and the inner surface faces the inside of the housing;
the valve body is disposed on the outer surface, and at least part of the valve body protrudes from the outer surface; and
at least part of the breathable membrane assembly is disposed on the outer surface.

3. The battery cell according to claim 1, **characterized in that**
the wall portion has an outer surface and an inner surface arranged opposite to each other, wherein the outer surface faces the outside of the housing, and the inner surface faces the inside of the housing;
the valve body is disposed on the outer surface, and at least part of the valve body protrudes from the outer surface; and
the breathable membrane assembly is disposed on the inner surface of the wall portion.

4. The battery cell according to claim 1, **characterized in that**
the wall portion has an outer surface and an inner surface arranged opposite to each other, wherein the outer surface faces the outside of the housing, and the inner surface faces the inside of the housing;
the valve body is disposed on the outer surface, and at least part of the valve body protrudes from the inner surface; and
the breathable membrane assembly is disposed on the inner surface.

5. The battery cell according to claim 1, **characterized in that**
the wall portion has an outer surface and an inner surface arranged opposite to each other, the outer surface faces the outside of the housing, and the inner surface faces the inside of the housing;
the valve body is disposed on the outer surface, and at least part of the valve body protrudes from the inner surface; and
at least part of the breathable membrane assembly is disposed on the outer surface.

6. The battery cell according to any one of claims 1 to 3, **characterized in that** the valve body comprises:
a valve seat; and
a valve cover comprising a cover top wall and a cover side wall connected to the cover top wall, wherein the cover top wall, the cover side wall, and the valve seat enclose to form the valve cavity, the valve seat is provided with the gas inlet, and the valve cover is provided with the gas outlet.

7. The battery cell according to claim 6, **characterized in that** the valve seat has a first through hole extending through the valve seat, and the gas inlet is the first through hole.

8. The battery cell according to claim 6 or 7, **characterized in that** the cover side wall has a second through hole extending through the cover side wall, and the gas outlet is the second through hole.

9. The battery cell according to claim 8, **characterized in that**
along a direction away from the cover top wall, the second through hole extends to an end portion of the body; and
optionally, a plurality of the second through holes are provided, and the plurality of the second through holes are circumferentially spaced apart on the cover side wall.

10. The battery cell according to any one of claims 6 to 9, **characterized in that** a first guide post protrudes from a side of the cover top wall facing the valve cavity, the cover top wall has a third through hole extending through the cover top wall and the first guide post, or the cover top wall has a third through hole extending through the cover top wall, and the gas outlet is the third through hole.

11. The battery cell according to any one of claims 6 to 10, **characterized in that** the valve cover further comprises a flanged wall, the cover side wall connects the cover top wall and the flanged wall, the flanged wall extends relative to the cover side wall toward a side away from the valve cavity, and the flanged wall is connected to the valve seat.

12. The battery cell according to claim 11, **characterized in that** a first recess recessed relative to a surface of the valve seat is provided on a side of the valve seat facing the valve cover, and at least part of the flanged wall is accommodated in the first recess and connected to the valve seat.

13. The battery cell according to claim 12, **characterized in that** a surface of the flanged wall facing the cover top wall is flush with a surface of the valve seat facing the valve cover; or the surface of the flanged wall facing the cover top wall is lower than the surface of the valve seat facing the valve cover.

14. The battery cell according to any one of claims 6 to 12, **characterized in that** the flanged wall is welded to the valve seat; wherein, in a circumferential direction of the cover side wall, at least part of a first welding mark of the flanged wall and the valve seat is offset from the second through hole on the cover side wall.

15. The battery cell according to claim 11, **characterized in that** a connecting protrusion protrudes from an outer peripheral surface of the valve seat, an accommodating groove is provided on an inner peripheral surface of the flanged wall, and the connecting protrusion is accommodated in the accommodating groove and connected to the flanged wall.

16. The battery cell according to claim 15, **characterized in that** the connecting protrusion is welded to the flanged wall, wherein the flanged wall has an upper surface and a lower surface arranged opposite to each other, the upper surface faces the cover top wall, and a second welding mark formed by welding between the connecting protrusion and the flanged wall is located on the lower surface of the flanged wall.

17. The battery cell according to any one of claims 1 to 3, **characterized in that** the valve body comprises a valve cover, the valve cover comprises a cover top wall and a cover side wall connected to the cover top wall, the cover top wall, the cover side wall, and the wall portion enclose the valve cavity, the first vent hole is the gas inlet, and the valve cover is provided with the gas outlet.

18. The battery cell according to claim 17, **characterized in that** a second recess recessed relative to an outer surface of the wall portion is provided on a side of the wall portion facing the outside of the housing, the valve cover further comprises a flanged wall, the cover side wall connects the cover top wall and the flanged wall, the flanged wall extends relative to the cover side wall toward a side away from the valve cavity, and at least part of the flanged wall is accommodated in the second recess and connected to the wall portion.

19. The battery cell according to any one of claims 1, 4 and 5, **characterized in that** the valve body comprises:
a valve seat comprising a seat bottom wall and a seat side wall connected to the seat bottom wall; and
a valve cover disposed at an end of the valve seat away from the seat bottom wall, the valve cover, the seat side wall, and the seat bottom wall enclose the valve cavity, the valve seat is provided with a fourth through hole, and the gas inlet is the fourth through hole.

20. The battery cell according to claim 19, **characterized in that** the valve cover has a fifth through hole extending through the valve cover, and the gas outlet comprises the fifth through hole.

21. The battery cell according to claim 19 or 20, **characterized in that** the valve cover is connected to the valve seat, and the gas outlet comprises a first vent gap formed between the valve cover and the valve seat.

22. The battery cell according to claim 19 or 20, **characterized in that** the valve cover is connected to the wall portion, and the gas outlet comprises a second vent gap formed between the valve cover and the wall portion.

23. The battery cell according to any one of claims 1, 4 and 5, **characterized in that** the valve body comprises a valve seat, the valve seat comprises a seat bottom wall and a seat side wall connected to the seat bottom wall, the seat bottom wall, the seat side wall, and the wall portion enclose the valve cavity, the valve seat is provided with a fourth through hole, the gas inlet is the fourth through hole, and the gas outlet is the first vent hole.

24. The battery cell according to any one of claims 1 to 23, **characterized in that** the valve core comprises:
an elastic member disposed in the valve cavity; and
a blocking member movably disposed in the valve cavity, wherein the blocking member is configured to block the gas inlet under the action of the elastic member and to open the gas inlet under an action of gas inside the housing.

25. The battery cell according to claim 24, **characterized in that** the valve body comprises a valve cover, a first guide post protrudes from a side of the valve cover facing the valve cavity, and a part of the elastic member is sleeved on an outer side of the first guide post.

26. The battery cell according to claim 25, **characterized in that** a diameter of the first guide post is D1, and an inner diameter of the elastic member is D2, satisfying 0 mm < D2 - D1 ≤ 5 mm.

27. The battery cell according to claim 25 or 26, **characterized in that** a second guide post protrudes from a side of the blocking member facing the valve cover, and a part of the elastic member is sleeved on an outer side of the second guide post.

28. The battery cell according to claim 27, **characterized in that** a diameter of the second guide post is D3, and an inner diameter of the elastic member is D2, satisfying 0 mm < D3 - D1 ≤ 5 mm.

29. The battery cell according to claim 27 or 28, **characterized in that**
in an axial direction of the elastic member, a gap is present between an end surface of the first guide post away from the valve cover and an end surface of the second guide post close to the valve cover; and
optionally, a height H1 of the gap satisfies 0 mm < H1 ≤ 0.5 mm.

30. The battery cell according to any one of claims 24 to 29, **characterized in that**
in an axial direction of the valve cavity, two ends of the elastic member respectively abut against the valve cover and the blocking member, a distance between a first abutting surface of the valve cover and a second abutting surface of the blocking member is L1, and a solid length of the elastic member is L2, satisfying L1 > L2, wherein the solid length of the elastic member refers to an occupied length of the elastic member when the elastic member is fully compressed; and
optionally, L1 - L2 > 0.5 mm.

31. The battery cell according to claim 30, **characterized in that** the elastic member is a spring, and the solid length L2 of the elastic member is d1 × n1 + d2 + d3, wherein d1 is a wire diameter of the spring, n1 is a maximum number of coils of the spring in an axial direction, d2 is a thickness of an outermost coil at one end of the spring, and d3 is a thickness of the outermost coil at another end of the spring, wherein d2 ≤ d1, and d3 ≤ d1.

32. The battery cell according to any one of claims 24 to 31, **characterized in that** a plurality of limiting protrusions protrude from an outer peripheral surface of the blocking member, and the plurality of limiting protrusions are circumferentially spaced apart along the blocking member.

33. The battery cell according to any one of claims 24 to 32, **characterized in that** the blocking member comprises a pressing portion and a sealing portion, two ends of the elastic member respectively abut against the valve cover and the pressing portion, the sealing portion is connected to a side of the pressing portion away from the valve cover, and the sealing portion is configured to block the gas inlet.

34. The battery cell according to claim 33, **characterized in that**
the sealing portion comprises ethylene propylene diene monomer, fluororubber, or Teflon; and/or
the elastic member comprises steel, iron, or aluminum.

35. The battery cell according to any one of claims 1 to 34, **characterized in that** the valve cover comprises a cover side wall, the cover side wall has a second through hole extending through the cover side wall, the gas outlet is the second through hole, and along an axial direction of the valve cavity, a sealing interface between the valve core and the valve seat is higher than or flush with a bottom wall of the second through hole.

36. The battery cell according to any one of claims 1 to 16, 19 to 22, and 24 to 35, **characterized in that** the first vent hole comprises a through hole section and a first hole section, the through hole section and the first hole section are arranged along a thickness direction of the wall portion, the first hole section is located on a side of the through hole section away from the inside of the housing, a diameter of the first hole section is larger than a diameter of the through hole section, and the one-way valve is at least partially accommodated in the first hole section.

37. The battery cell according to claim 36, **characterized in that** the first hole section comprises a circumferentially arranged hole side surface, and an outer peripheral surface of the valve cover/valve seat of the one-way valve is welded to the hole side surface.

38. The battery cell according to claim 36 or 37, **characterized in that** a first step surface and a second step surface is provided on a side of the valve seat facing the valve cover, the first step surface is closer to the valve cover than the second step surface, and an outer peripheral surface of the second step is welded to the hole side surface.

39. The battery cell according to claim 37 or 38, **characterized in that** the hole side surface matches the outer peripheral surface of the valve cover/valve seat of the one-way valve, and both the hole side surface and the outer peripheral surface of the valve cover/valve seat of the one-way valve are arranged at an acute angle relative to a central axis of the first vent hole.

40. The battery cell according to any one of claims 36 to 39, **characterized in that**
a stress relief groove is provided around a third welding mark between the valve cover/valve seat and the wall portion;
optionally, a first stress relief groove is provided on a side surface of the valve seat/valve cover facing the outside of the housing; and/or
a second stress relief groove is provided on a side surface of the wall portion facing the outside of the housing.

41. The battery cell according to any one of claims 1 to 40, **characterized in that** the breathable membrane assembly comprises a breathable membrane and a connecting member, the breathable membrane is configured to allow gas inside the battery cell to pass through the breathable membrane and be vented, the connecting member is provided with a first breathable hole, and the breathable membrane is disposed on the connecting member and covers the first breathable hole.

42. The battery cell according to claim 41, **characterized in that** the connecting member has a first annular platform recessed relative to a surface of the connecting member, the first annular platform is arranged around the first breathable hole, and the breathable membrane is disposed on the first annular platform.

43. The battery cell according to claim 40 or 41, **characterized in that** the breathable membrane assembly further comprises a backing member, the backing member is disposed between the breathable membrane and the connecting member, and a gas permeability rate of the backing member is greater than a gas permeability rate of the breathable membrane.

44. The battery cell according to claim 43, **characterized in that** the connecting member has a second annular platform recessed relative to a surface of the connecting member, the second annular platform is arranged around the first breathable hole, and the backing member is disposed on the second annular platform.

45. The battery cell according to any one of claims 41 to 44, **characterized in that** the connecting member is a metal member.

46. The battery cell according to any one of claims 41 to 45, **characterized in that** the breathable membrane is disposed on a side of the connecting member facing the inside of the housing, and the breathable membrane covers the first breathable hole.

47. The battery cell according to any one of claims 41 to 46, **characterized in that**
the connecting member is welded to the wall portion;
optionally, a stress relief groove is provided around a fourth welding mark between the connecting member and the wall portion;
optionally, a third stress relief groove is provided on the connecting member around the fourth welding mark between the connecting member and the wall portion; and/or
a fourth stress relief groove is provided on the wall portion around the fourth welding mark between the connecting member and the wall portion.

48. The battery cell according to any one of claims 1 to 47, **characterized in that** the wall portion has a first recessed platform recessed relative to a surface of the wall portion, the first recessed platform is arranged around the second vent hole, and the breathable membrane assembly is at least partially located on the first recessed platform.

49. The battery cell according to any one of claims 1 to 48, **characterized in that** the battery cell further comprises:
an insulating member disposed on a side of the wall portion facing the inside of the housing; a third vent hole and a fourth vent hole extending through the insulating member are arranged at intervals on the insulating member, the third vent hole communicates with the first vent hole on the wall portion, and the fourth vent hole communicates with the second vent hole on the wall portion.

50. The battery cell according to any one of claims 1 to 49, **characterized in that**
the first vent hole is a liquid injection hole of the battery cell; or
the first vent hole is spaced apart from the liquid injection hole of the battery cell.

51. The battery cell according to any one of claims 1 to 50, **characterized in that** the housing comprises:
a casing, with an accommodating cavity having an opening formed inside, wherein the accommodating cavity is configured to accommodate an electrode assembly;
an end cover closing the opening;
wherein the end cover is the wall portion; or
the casing comprises the wall portion; or
the wall portion is a wall located at a top of the housing when the battery cell is in a placed state.

52. The battery cell according to any one of claims 1 to 51, **characterized in that** the first vent hole and the second vent hole are located on a same wall portion.

53. The battery cell according to any one of claims 1 to 52, **characterized in that** the battery cell further comprises a pressure relief mechanism, the pressure relief mechanism is disposed on the housing, the pressure relief mechanism is configured to be actuated and relieve internal pressure of the battery cell when the battery cell undergoes thermal runaway, and an actuation pressure of the pressure relief mechanism is greater than an opening pressure of the one-way valve.

54. The battery cell according to claim 53, **characterized in that** the wall portion has a pressure relief hole, the pressure relief hole communicates the inside of the housing with the outside of the housing, and the pressure relief mechanism is disposed in the pressure relief hole; and a diameter of the pressure relief hole is greater than a diameter of the first vent hole.

55. The battery cell according to claim 53 or 54, **characterized in that** a gas venting rate of the one-way valve is less than a gas venting rate of the pressure relief mechanism.

56. The battery cell according to any one of claims 1 to 55, **characterized in that**
a gas permeability rate of the breathable membrane is 3-10 ml/day.

57. The battery cell according to any one of claims 1 to 56, **characterized in that**
an opening pressure of the one-way valve is greater than or equal to 0.2 MPa, optionally, greater than or equal to 0.4 MPa.

58. A battery, **characterized by** comprising the battery cell according to any one of claims 1 to 57.

59. An electric device, **characterized by** comprising the battery cell according to any one of claims 1 to 57, wherein the battery cell is configured to supply electric energy.
